(19) Europäisches Patentamt / European Patent Office / Office européen des brevets

(11) **EP 2 995 139 B1**

(12) **EUROPEAN PATENT SPECIFICATION**

(45) Date of publication and mention
of the grant of the patent:
**21.02.2018 Bulletin 2018/08**

(21) Application number: **14833841.1**

(22) Date of filing: **08.08.2014**

(51) Int Cl.:
*H04W 52/14* (2009.01)     *H04W 72/04* (2009.01)
*H04W 52/08* (2009.01)     *H04L 1/18* (2006.01)
*H04L 5/14* (2006.01)     *H04W 52/22* (2009.01)
*H04W 52/48* (2009.01)     *H04W 52/32* (2009.01)
*H04W 52/36* (2009.01)     *H04W 52/10* (2009.01)
*H04W 52/58* (2009.01)     *H04L 5/00* (2006.01)
*H04W 52/34* (2009.01)

(86) International application number:
**PCT/CN2014/084003**

(87) International publication number:
**WO 2015/018363 (12.02.2015 Gazette 2015/06)**

(54) **TIMING RELATION OF TPC COMMAND AND UE TRANSMIT POWER ADJUSTMENT IN ADAPTIVE TDD SYSTEMS**

ZEITBEZUG VON TPC-BEFEHLEN UND ANPASSUNG DER ÜBERTRAGUNGSLEISTUNG EINES BENUTZERGERÄTS IN ADAPTIVEN TDD-SYSTEMEN

RELATION TEMPORELLE ENTRE INSTRUCTION TPC ET AJUSTEMENT DE PUISSANCE D'ÉMISSION D'UE DANS DES SYSTÈMES TDD ADAPTATIFS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.08.2013 PCT/CN2013/081088**

(43) Date of publication of application:
**16.03.2016 Bulletin 2016/11**

(73) Proprietor: **MediaTek Inc.**
**Hsin-Chu 300 (TW)**

(72) Inventors:
• **HWANG, Chien-Hwa**
**Zhubei City**
**Hsinchu County**
**Taiwan 302 (TW)**

• **LIN, Shiang-Jiun**
**Hsinchu City**
**Taiwan 300 (TW)**
• **WU, Min**
**Beijing 100029 (CN)**
• **ZHUANG, Xiangyang**
**Lake Zurich, Illinois 60047 (US)**

(74) Representative: **2K Patentanwälte Blasberg Kewitz & Reichel**
**Partnerschaft mbB**
**Schumannstrasse 27**
**60325 Frankfurt am Main (DE)**

(56) References cited:
**WO-A1-2012/087006     WO-A1-2013/051855**
**WO-A2-2012/165875     CN-A- 101 567 713**
**US-A1- 2013 010 706**

EP 2 995 139 B1

**Description**

**CROSS REFERENCE TO RELATED APPLICATIONS**

This application claims priority from Application Number PCT/CN2013/081088, entitled "UL Power Control in Adaptive TDD Systems," filed on August 8, 2013.

**TECHNICAL FIELD**

The present invention relates generally to wireless communication systems and, more particularly, to uplink power control in adaptive Time Division Duplex (TDD) systems.

**BACKGROUND**

In wireless communication systems, such as defined by 3GPP Long Term Evolution (LTE/LTE-A) specification, user equipments (UE) and base stations (eNodeB) communicate with each other by sending and receiving data carried in radio signals according to a predefined radio frame format. Typically, the radio frame format contains a sequence of radio frames, each radio frame having the same frame length with the same number of subframes. The subframes are configures to perform uplink (UL) transmission or downlink (DL) reception in different Duplexing methods. Time-division duplex (TDD) is the application of time-division multiplexing to separate transmitting and receiving radio signals. TDD has a strong advantage in the case where there is asymmetry of the uplink and downlink data rates. Seven different TDD configurations are provided in LTE/LTE-A systems to support different DL/UL traffic ratios for different frequency bands.

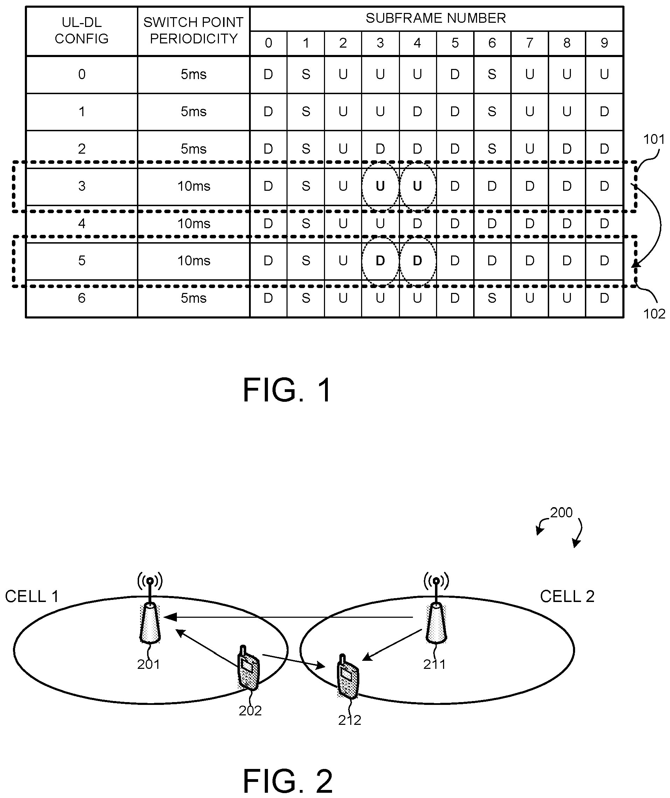

Figure 1 (Prior Art) illustrates the TDD mode UL-DL configurations in an LTE/LTE-A system. Figure 1 shows that each radio frame contains ten subframes, D indicates a DL subframe, U indicates an UL subframe, and S indicates a Special subframe/Switch point (SP). Each SP contains a DwPTS (Downlink pilot time slot), a GP (Guard Period), and an UpPTS (Uplink pilot time slot). DwPTS is used for normal downlink transmission and UpPTS is used for uplink channel sounding and random access. DwPTS and UpPTS are separated by GP, which is used for switching from DL to UL transmission. The length of GP needs to be large enough to allow the UE to switch to the timing advanced uplink transmission. These allocations can provide 40% to 90% DL subframes.

In 3GPP LTE Rel-11 and after, the trend of the system design shows the requirements on more flexible configuration in the network system. Based on the system load, traffic type, traffic pattern and so on, the system can dynamically adjust its parameters to further utilize the radio resource and to save the energy. One example is the support of dynamic TDD configuration, where the TDD configuration in the system may dynamically change adapting to the DL-UL traffic ratio. When the change better matches the instantaneous traffic situation, the system throughput will be enhanced.

3GPP LTE-A improves spectrum efficiency by utilizing a diverse set of base stations deployed in a heterogeneous network topology. Using a mixture of macro, pico, femto and relay base stations, heterogeneous networks enable flexible and low-cost deployments and provide a uniform broadband user experience. Dynamic TDD configuration is especially useful in heterogeneous networks. While an adaptive TDD system has the capability to configure the system parameters adaptively according to the environments it is under operation, severe eNB-to-eNB interference may occur in adaptive TDD systems.

Figure 2 (Prior Art) illustrates one interference scenario in an adaptive TDD system 200. In adaptive TDD system 200, each cell may configure its TDD UL-DL configuration according to the traffic loads in UL and DL. Therefore, it is possible that two neighboring cells have different transmission directions at one subframe. To be specific, consider the scenario shown in Figure 2, where Cells 1 and 2 are performing UL and DL transmission, respectively. Base station 201 of Cell 1 receives a severe interference from base station 211 of Cell 2 due to the high transmit power of a base station. It can be seen from Figure 2 that UE 212 in Cell 2 also suffers from the interference contributed by UE 202 in Cell 1. However, this interference is generally weaker and is much less likely to occur.

Such eNB-to-eNB and UE-to-UE interference happens only at subframes that may be UL or DL in different TDD configurations, and these subframes are called flexible subframes. Other subframes having fixed transmission directions regardless of TDD configurations are called fixed subframes. The network may configure several subframe sets with subframes in the same subframe set having similar interference level. One of the methods to conquer the interference is by means of uplink power control based on the different subframe sets. In general, the transmit power of a UE is controlled more efficiently to prevent from the deterioration of the received signal quality due to the abrupt change of the interference level occurring at the transition of fixed and flexible subframes. In the current LTE specifications, however, the UL power control mechanism is not efficient enough to face the situation.

First, power headroom report (PHR) is used to provide a serving eNB with information about the difference between the nominal UE maximum transmit power and the estimated power for UL data transmission per activated serving cell. PHRs are triggered when timers expire. According to the current LTE specifications, the PHR of each subframe set may have different reporting granularity in time. This leads to eNB's insufficient information about a UE's transmit power capability in scheduling for different subframe sets.

Second, in an LTE TDD system, the timing relation between a closed-loop power control command and the adjustment of the transmit power is determined by the TDD UL-DL configuration of the cell. This timing relation may become ambiguous at the frame in which the TDD UL-DL configuration changes.

Third, to compensate for the difference of interference levels at fixed and flexible subframes, the UE transmit power at flexible subframes should be higher than at fixed subframes. In the current LTE specification, this power increase can be done by closed-loop power control. However, in general, the closed-loop power control supported by the current LTE is not able to catch up with the abrupt interference level change.

Solutions are sought.

WO 2013 051 855 A1 relates to a method for transmitting a power headroom report (PHR) and a terminal apparatus for same. The method for transmitting a PHR from a terminal in a network, which includes a base station and at least one cooperative node performing cooperative communication with the base station, includes a step of determining a sounding reference symbol (SRS) transmission power for transmitting SRSs in a specific serving cell, wherein the determined SRS transmission power is a value determined for the transmission of the SRSs to a plurality of nodes including a first node corresponding to the base station and the at least one cooperative node. However, WO 2013 051 855 A1 fails to disclose the distinguishing features in the characterizing part of claim 1.

WO 2012 087 006 A1 relates to an apparatus and a method for allocating resources for transmitting an HARQ ACK/NACK signal for a downlink subframe using a PUCCH format 3 in a time division duplex (TDD) system using a single carrier are provided. Since the resources are allocated through a resource indicator transmitted using a power control field transmitted on a PDCCH of the downlink subframe, the resources for transmitting the HARQ ACK/NACK signal may be allocated by effectively using resources allocated to a duplicately transferred control signal.

## SUMMARY

The embodiments of this invention propose methods of UL power control in adaptive TDD systems. In an adaptive TDD network, the actual TDD configurations may change from time to time. Three potential problems related to UL power control in an adaptive TDD network are identified in this invention. They are: (1) Granularity of PHRs for different subframe sets would be very different. In this case, the serving eNB has less information about UE's transmit power capability at some subframe sets; (2) In determining the values of power control parameters, ambiguity may occur at the frame in which the TDD UL-DL configuration changes; and (3) For different subframe sets, the average interference levels may be quite different. Therefore, the closed-loop TPC command may not be able to catch up with the interference level variations. To solve the above problems, solutions to be adopted in adaptive TDD systems are proposed by the method according to claim 1. Further advantageous embodiments are the subject-matter of the dependent claims.

In a first novel aspect, a method of UE transmit power adjustment based on TPC command in adaptive TDD systems is proposed. A UE obtains TDD configuration information from a base station in an adaptive TDD system. The UE also obtains an HARQ reference configuration from the base station. The UE then receives a transmit power control (TPC) command in one or more previous subframes. The UE performs power adjustment in a subsequent subframe based on the TPC command. The location of the previous subframes is determined based on the HARQ reference configuration. In one embodiment, an UL HARQ reference configuration is applied for PUSCH power control. In another embodiment, a DL HARQ reference configuration is applied for PUCCH power control.

In a second novel aspect, a User Equipment is proposed. The UE, comprises: a Time Division Duplexing, TDD, configuration module that obtains TDD configuration information in an adaptive TDD system; a hybrid automatic repeat request, HARQ, configuration module that obtains an HARQ reference configuration; a receiver that receives a transmit power control, TPC, command in one or more previous subframes; and a power adjustment module that performs power adjustment in a subsequent subframe based on the TPC command, wherein the location of the previous subframes is determined based on the HARQ reference configuration.

## BRIEF DESCRIPTION OF DRAWINGS

The accompanying drawings, where like numerals indicate like components, illustrate embodiments of the invention.

Figure 1 (Prior Art) illustrates the TDD mode UL-DL configurations in an LTE/LTE-A system.
Figure 2 (Prior Art) illustrates one interference scenario in an adaptive TDD system.
Figure 3 illustrates uplink power control in an LTE system with adaptive TDD configuration in accordance with one novel aspect.

Figure 4 is a simplified block diagram of a user equipment and a base station in adaptive TDD systems in accordance with one novel aspect.

Figure 5 illustrates a procedure of PH reporting in an adaptive TDD system in accordance with one novel aspect.

Figure 6 illustrates an example of PH MAC control element with k subframe sets.

Figure 7A illustrates an example of extended PH MAC control element with k subframe sets on SCell1.

Figure 7B illustrates an example of extended PH MAC control element with k subframe sets on PCell.

Figure 8 illustrates one example of PH reporting procedures in an adaptive TDD enabled component carrier.

Figure 9 illustrates an en example of PH MAC control element carrying PH for subframe set n1.

Figure 10 illustrates an en example of extended PH MAC control element delivering PH for subframe set n1 of SCELL1 with other PHRs.

Figure 11 illustrates an en example of extended PH MAC control element delivering PHRs for subframe set n1 of SCELL1 and for subframe set n3 of SCELL2.

Figure 12 illustrates an en example extended PH MAC control element when PCELL is adaptive TDD enabled.

Figure 13 illustrates an en example extended PH MAC control element when both PCELL and SCELL1 are adaptive TDD enabled component carriers.

Figure 14 illustrates one example of PH reporting procedures in an adaptive TDD system.

Figure 15 is a flow chart of a method of PH reporting in accordance with one novel aspect.

Figure 16 illustrates the concept of HARQ reference configuration in adaptive TDD systems.

Figure 17 illustrates a procedure of UE transmit power adjustment in accordance with one novel aspect in accordance with one novel aspect.

Figure 18 illustrates the timing relations between TPC command and UE transmit power adjustment for different TDD configurations.

Figure 19 illustrates one example of the timing relation between a TPC command and UE power adjustment.

Figure 20 illustrates another example of the timing relation between a TPC command and UE power adjustment.

Figure 21 is a flow chart of a method of UE transmit power adjustment based on TPC command in adaptive TDD systems in accordance with one novel aspect.

Figure 22 illustrates different subframe sets in adaptive TDD systems for UL power control.

Figure 23 illustrates a procedure of separate accumulation in closed-loop power control in accordance with one novel aspect.

Figure 24 illustrates one example of separate accumulation in closed-loop power control for PUSCH in adaptive TDD systems.

Figure 25 is a flow chart of a method of closed-loop power control for different subframe sets in adaptive TDD systems in accordance with one novel aspect.

## DETAILED DESCRIPTION

Reference will now be made in detail to some embodiments of the invention, examples of which are illustrated in the accompanying drawings.

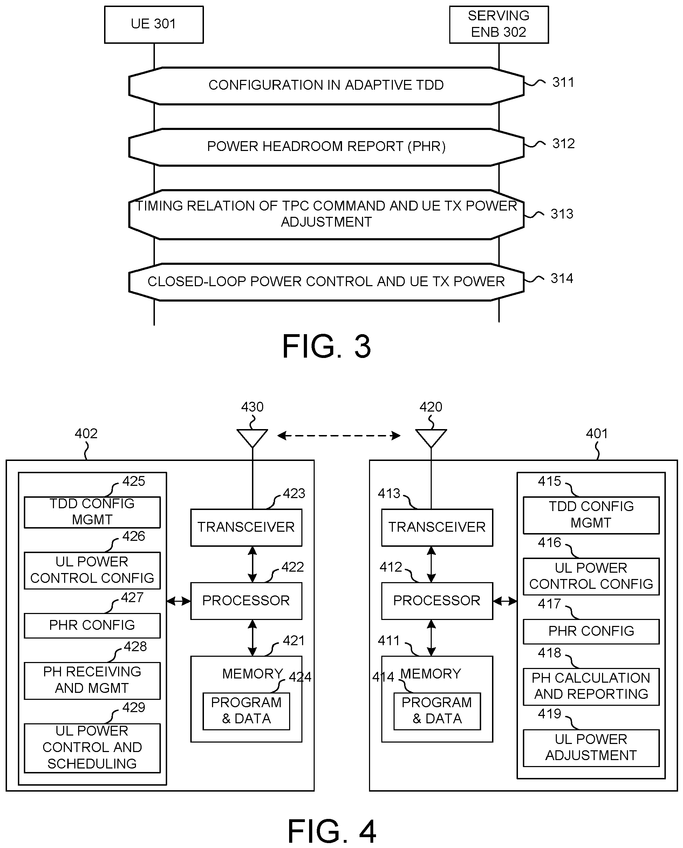

Figure 3 illustrates uplink power control in an LTE system with adaptive TDD configuration in accordance with one novel aspect. The LTE system supports adaptive time division duplex (TDD) configuration, where the TDD configuration in the system may dynamically change according to the downlink-uplink (DL-UL) traffic ratio. The traditional mechanism for adapting UL-DL allocation is based on the system information change procedure (e.g., broadcasting TDD configuration via SIB1). However, since TDD configuration may change frequently (e.g., TDD configuration switch is 10ms most frequently), UE behavior may be impacted if the TDD change is not sent to UEs in time (e.g., SIB1 is updated at least 640ms). In adaptive TDD systems, the notification of TDD change may be sent through a dedicated signaling, i.e., RRC, MAC or PDCCH signaling, where the change period may be much less than the change of SIB1 (640ms). The benefits to adopt TDD configuration change by dedicated signaling is that it can be adjusted more efficiently and frequently to match the instantaneous traffic pattern.

In an adaptive TDD system, each cell may configure its TDD UL-DL configuration according to the traffic loads in UL and DL. Thus, it is possible that two neighboring cells have different transmission directions at one subframe, which results in severe interference. Such severe interference happens only at subframes that may be UL or DL in different TDD configurations. From Figure 1, it can be seen that subframes 3, 4, 7, 8, and 9 are such subframes, and are called *flexible subframes* since their transmission directions may be UL or DL. On the other hand, subframes 0, 1, 2, 5, and 6 have fixed transmission directions regardless of TDD configurations, and are called *fixed subframes.*

In an adaptive TDD system, due to the difference of interference level in different subframes, the network may configure several subframe sets with subframes in the same subframe set having a similar interference level. For example, the network may configure two subframe sets as {2} and {3, 4, 7, 8, 9}, since subframe 2 is the only fixed UL subframe in LTE and has the weakest interference. The network may also configure three subframe sets as {2}, {3, 4}, and {7, 8, 9}, if there is coordination among cells in the choice of TDD UL-DL configurations so that the interference levels at subframes {3, 4} and {7, 8, 9} are quite different.

One of the method to mitigate the interference is via uplink power control. For example, a desired signal with stronger power can conquer high-level interference from neighbor cells. In accordance with one novel aspect, various solutions for uplink power control in adaptive TDD systems are proposed. As illustrated in Figure 3, in step 311, UE 301 receives configuration information from eNB 302. The configuration information comprises an actual TDD configuration, a reference TDD configuration, subframe set configuration, and power control and power headroom (PH) reporting configuration. In step 312, UE 301 performs PH reporting based on PH reporting configuration and subframe set configuration. PHRs of different subframe sets are reported with the same granularity. In step 313, UE 301 performs transmit power adjustment based on received transmit power control (TPC) command from eNB 302. The timing relation of the TPC command and the UE transmit power adjustment is based on the reference configuration. In step 314, the UE transmit power is based on closed-loop power control, where separate accumulation of TPC commands for each subframe set are applied.

Figure 4 is a simplified block diagram of a user equipment UE 401 and a base station eNB 402 in adaptive TDD systems in accordance with one novel aspect. UE 401 comprises memory 411, a processor 412, an RF transceiver 413, and an antenna 420. RF transceiver 413, coupled with antenna 420, receives RF signals from antenna 420, converts them to baseband signals and sends them to processor 412. RF transceiver 413 also converts received baseband signals from processor 412, converts them to RF signals, and sends out to antenna 420. Processor 412 processes the received baseband signals and invokes different functional modules to perform features in UE 401. Memory 411 stores program instructions and data 414 to control the operations of UE 401. The program instructions and data 414, when executed by processor 412, enables UE 401 to access a mobile communication network for receiving TDD configuration information and power control command, and performing UL power control accordingly.

UE 401 also comprises various function modules including a TDD configuration management module 415 that performs actual TDD configurations and/or reference HARQ configurations and their changes, a UL power control configuration module 416 that receives UL power control related configurations, a PHR configuration module 417 that performs PHR configuration and operation, a PH calculation and reporting module 418 that calculates PH and sends PHR to the eNB, and a UL power adjustment module 419 that adjusts the UL transmit power according to UL power control commands. The different components and modules may be implemented in a combination of hardware circuits and firmware/software codes being executable by processor 412 to perform the desired functions.

Similarly, eNB 402 comprises memory 421, a processor 422, a transceiver 423 coupled to one or multiple antennas 430. The eNB also comprises various function modules including a TDD configuration management module 425 that configures actual and/or reference TDD configurations to UEs, a UL power control configuration module 426 that performs UL power control related configurations, a PHR configuration module 427 that performs PHR configuration and operation, a PH receiving and management module 428 that receives PHR from UEs, and a UL power control and scheduling module 429 that performs uplink power control and uplink scheduling to UEs according to the received PHR.

**Power Headroom Reporting (PHR) in Adaptive TDD Systems**

Up to Rel-11 LTE, there are two types of UE PHRs defined. Assume a UE PH is valid for subframe i for serving cell c. Two types of PHRs are defined as follows.

If the UE transmits a physical UL shared channel (PUSCH) without a physical UL control channel (PUCCH) in subframe i for serving cell c, the PH for a Type 1 report is computed using:

$$PH_{type1,c}(i) = P_{CMAX,c}(i) - \left\{ 10\log_{10}(M_{PUSCH,c}(i)) + P_{O\_PUSCH,c}(j) + \alpha_c(j) \cdot PL_c + \Delta_{TF,c}(i) + f_c(i) \right\} \text{ [dB] (1)}$$

where,

- $M_{PUSCH,c}(i)$, $P_{O\_PUSCH,c}(j)$, $\alpha_c(j)$, $PL_c$, $\Delta_{TF,c}(i)$, and $f_c(i)$ are defined in section 5.1.1.1 of 3GPP TS 36.213.
- $M_{PUSCH,c}(i)$, $f_c(i)$ are parameters given by physical downlink control channel (PDCCH) grant from the eNodeB.
- $M_{PUSCH,c}(i)$ is the bandwidth of the PUSCH resource assignment expressed in number of resource blocks valid for subframe i and serving cell c.
- $f_c(i)$ is the power control adjustment state for subframe i and serving cell c.
- $P_{O\_PUSCH,c}(j)$, $\alpha_c(j)$, $\Delta_{TF,c}(i)$ are parameters signaled by radio resource control (RRC) from the eNodeB.
- $P_{CMAX,c}(i)$ is UE-configured maximum transmitting power for subframe i and serving cell c.
- $PL_c$ is the downlink pathloss estimate calculated in the UE for serving cell c in dB.

If the UE transmits PUSCH simultaneous with PUCCH in subframe *i* for the primary cell, the PH for a Type 2 report is computed using:

$$PH_{\text{type2}}(i) = P_{\text{CMAX},c}(i) - 10\log_{10}\left(\begin{array}{c}10^{\left(10\log_{10}(M_{\text{PUSCH},c}(i)) + P_{\text{O\_PUSCH},c}(j) + \alpha_c(j) \cdot PL_c + \Delta_{\text{TF},c}(i) + f_c(i)\right)/10} \\ + \ 10^{\left(P_{\text{O\_PUCCH}} + PL_c + h\left(n_{CQI}, n_{HARQ}, n_{SR}\right) + \Delta_{\text{F\_PUCCH}}(F) + \Delta_{TxD}(F') + g(i)\right)/10}\end{array}\right) \ [\text{dB}] \ (2)$$

where,

- *$P_{CMAX,c}$, $M_{\text{PUSCH},c}(i)$, $P_{\text{O\_PUSCH},c}(j)$, $\alpha_c(j)$, $\Delta_{\text{TF},c}(i)$ and $f_c(i)$ are the primary cell parameters as defined in section 5.1.1.1 of 3GPP TS 36.213, and $P_{\text{O\_PUCCH}}$, $PL_c$, $h(n_{CQI}, n_{HARQ}, n_{SR})$, $\Delta_{\text{F\_PUCCH}}(F)$, $\Delta_{TxD}(F')$ and $g(i)$ are defined in section 5.1.2.1 of 3GPP TS 36.213.*

According to 3GPP TS 36.321, PHR shall be triggered if any of the following events has occurred: 1) *prohibitPHR-Timer* expires or has expired and the path loss has changed more than *dl-PathlossChange* dB for at least one activated serving cell which is used as a pathloss reference since the last transmission of a PHR when the UE has UL resources for new transmission; 2) *periodicPHR-Timer* expires; 3) upon configuration or reconfiguration of the PH reporting functionality by upper layers, which is not used to disable the function; 4) activation of an SCell with configured uplink; 5) *prohibitPHR-Timer* expires or has expired, when the UE has UL resources for new transmission, and the following is true in this transmit time interval for any of the activated serving cells with configured UL; and 6) there are UL resources allocated for transmission or there is a PUCCH transmission on this cell, and the required power backoff due to power management for this cell has changed more than *dl-PathlossChange* dB since the last transmission of a PHR when the UE had UL resources allocated for transmission or PUCCH transmission on this cell.

The PHR is sent by the UE at a subframe when *periodicPHR-Timer* expires or when certain events happen under the condition that *prohibitPHR-Timer* has expired. In an adaptive TDD system, the subframes that carry PHRs may not be evenly distributed among subframe sets. For example, in LTE, subframe 2 is the only fixed UL subframe, and subframes 3, 4, 7, 8, 9 are flexible subframes. If the network configures subframes {2} and {3, 4, 7, 8, 9} as the first and second subframe sets, respectively, then the reporting of PHRs for the first subframe set would be much less frequent than the reporting of PHRs for the second subframe set. In this case, the serving eNB has less information in scheduling about the difference between the nominal UE maximum transmit power and the estimated power for the first subframe set.

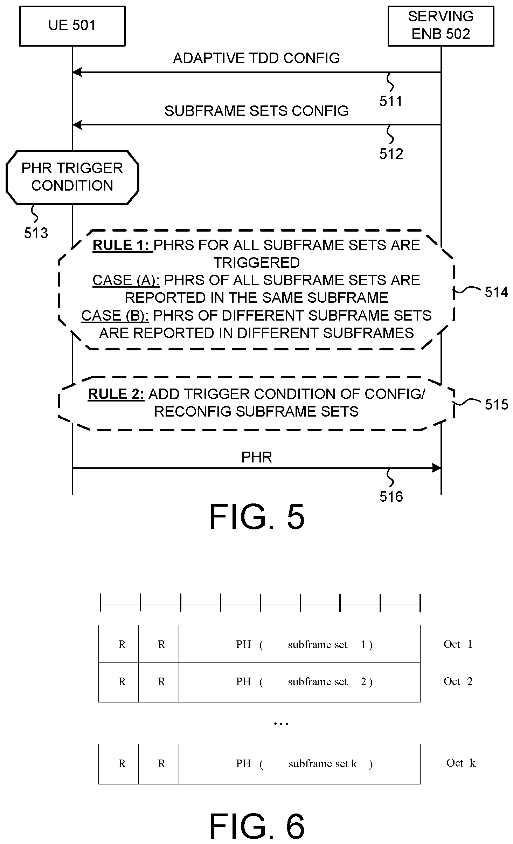

Figure 5 illustrates a procedure of PH reporting in an adaptive TDD system in accordance with one novel aspect. In step 511, UE 501 receives adaptive TDD configuration from eNB 502. In step 512, UE 501 receives subframe sets configuration from eNB 502. For example, the network configures subframes {2} and {3, 4, 7, 8, 9} as the first and second subframe sets, respectively. In step 513, UE 501 detects PHR triggering condition for the configured subframe sets. In step 514 (Rule 1), if at least one PHR has been triggered and not cancelled, then PHRs for all subframe sets of an adaptive TDD enabled component carrier are triggered. In a first embodiement (case (a)) of Rule 1, PHRs of all subframe sets are reported in the same subframe. In a second embodiemnt (case (b)) of Rule 1, PHRs of different subfame sets are reported in different subframes. In step 515 (Rule 2), upon the configuration or reconfiguration of subframe sets by upper layers, PHR is triggered. Furthermore, *dl-PathlossChange* is separately configured for each subframe set when the pathloss compensation factor $\alpha_c(j)$ defined in 3FPP TS 36.213 is separately configured for each subframe set. This is because different values of $\alpha_c(j)$ may lead to different level of influence of pathloss change to the variation of PH. Finally, in step 516, UE 501 reports PHRs to eNB 502 according to Rule 1 (case (a) or (b)).

It is noted that for PH reporting, it is allowed that a PH value is obtained and reported in different subframes. This because the PH reporting subframe belongs to a speicifc subframe set, the PHs of all other subframe sets cannot be obtained at the PH reporting subframe. In a subframe that a PH is obtained, the UE obtains the PH based on the PH formula using the parameters (e.g., the number of UL resource blocks) of that subframe. In a subframe that a PH is reported, the PHR is delivered in the MAC control element in that subframe to the network. In the following, *'extendedPHR is configured'* and *'extendedPHR is not configured'* are used to indicate LTE Rel-10 and Rel-8 PHR mechanisms, respectively. In addition, a subframe is called a PH reportable subframe if 1) the UE has UL resources allocated for new transmission for the subframe; and 2) the allocated UL resources can accommodate a PHR MAC control element plus its subheader if *extendedPHR* is not configured, or an Extended MAC control element plus its subheader if *extendedPHR* is configured, as a result of logical channel prioritization.

In one example of Rule 1 and case (a), suppose there are k subframe sets are configured. The PH reporting subframe is the first PH reportable subframe on or after PHRs triggering in which the PHs for all subframe sets have been obtained. The PH of subframe set n is obtained at the subframe that meets all of the following conditions: 1) The UE has UL resources allocated for new transmission for this subframe; 2) This subframe belongs to subframe set n and occurs no earlier than the PHRs triggering subframe; and 3) A rule that chooses one subframe among all subframes meeting the above two conditions. One example for the rule is the subframe closest to the PH reporting subframe is chosen; another example is that the subframe that occurs earliest among all others is chosen. Upon PH reporting, the PHR triggering of all subframe sets are canceled at the subframe in which PHs are reported. In addition, the periodicPHR-Timer and *prohibitPHR-Timer* are restarted at the subframe in which PHs are reported.

Figure 6 illustrates an example of a PH MAC control element with k subframe sets. With *extendedPHR* not configured, the PH MAC control element has a variable size of k Octets, and is defined in Figure 6 when there are k subframe sets configured for an adaptive TDD enabled component carrier, where the fields R and PH are defined in 3GPP TS 36.321.

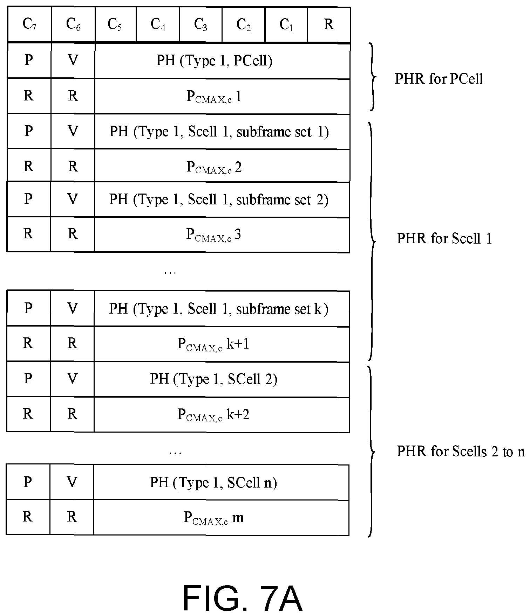

Figure 7A illustrates an example of an extended PH MAC control element with k subframe sets on SCell1. With *extendedPHR* configured, the extended PH MAC control element had a variable size and is defined in Figure 7A for the example of n SCells (indexed from 1 to n) being configured, and SCell1 being an adaptive TDD enabled component carrier with k subframe sets, where the fields Ci, R, V, PH, and $P_{CMAC,c}$ are defined in 3GPP TS 36.321.

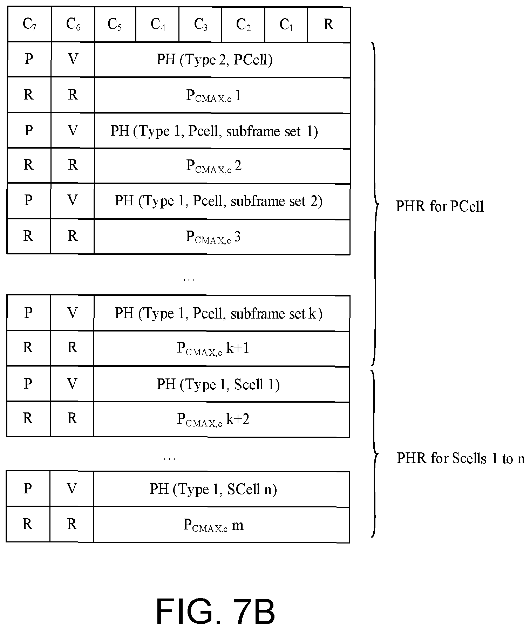

Figure 7B illustrates an example of an extended PH MAC control element with k subframe sets on PCell. With *extendedPHR* configured, if a UE is configured with simultaneous PUCCH and PUSCH, a Type 2 PHR for PCell is always reported when Type 1 PHR is reported. The extended PH MAC control element is defined in Figure 7B when PCell is an adaptive TDD enabled component carrier and simultaneous PUCCH and PUSCH is configured. The number of configured subframe sets for PCell is k, and SCells 1 to n are configured.

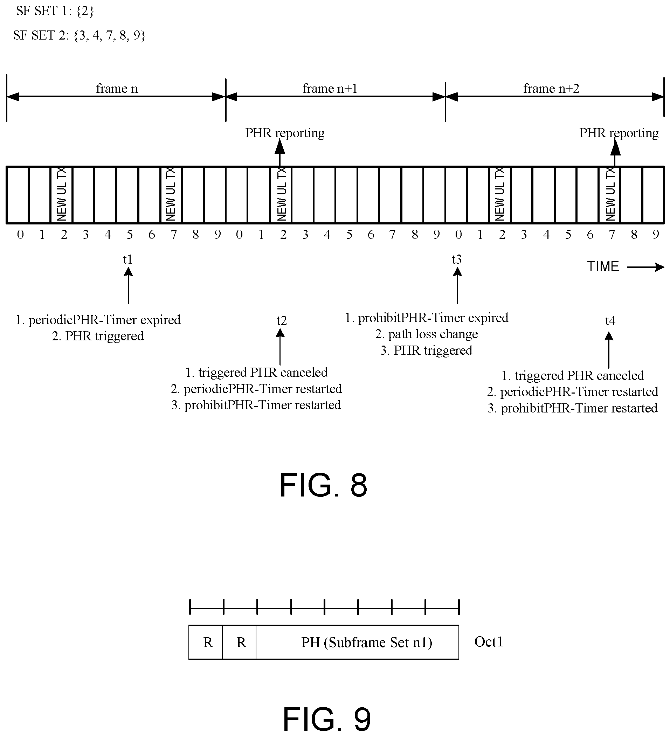

Figure 8 illustrates one example of PH reporting procedure in an adaptive TDD enabled component carrier for case (a). Suppose carrier aggregation is not configured, and two subframe sets {2} and {3, 4, 7, 8, 9} are configured. At time t1, the timer *periodicPHR-Timer* expires at subframe 5 of frame n, and PHR is triggered at that subframe. At subframe 7 of the same frame, the UE has a new UL transmission. However, since PHs of subframe set 1 has not been obtained, no PHs are reported at subframe 7 of frame n. At time t2, at subframe 2 of frame n+1, PHs of both subframe sets have been obtained, and PHs are reported at the subframe. At the same time, the triggered PHRs are cancelled, and *prohibitPHR-Timer* and *periodicPHR-Timer* are restarted. Later, at time t3, at subframe 0 of frame n+2, *prohibitPHR-Timer* has expired, and the path loss has changed more than *dl-PathlossChange* dB since the last transmission of a PHR. PHRs are triggered at that subframe. At time t4, at subframe 7 of the same frame, the UE has a new UL transmission, and PHs of both subframe sets have been obtained. PHRs for all subframe sets are reported at that subframe. At the same time, the triggered PHRs are canceled, and *prohibitPHR-Timer* and *PeriodicPHR-Timer* are restarted.

A timer *subframeSetWaitingPHR-Timer* is (re)started when PHRs are triggered. If the PH of subframe set n has not been obtained when the timer expires, then two options can be adopted. In a first option, the PHR for the subframe set n is omitted. In a second option, a virtual PH of the subframe set is obtained at the subframe meeting the following conditions: 1) this subframe belongs to subframe set n and occurs no earlier than the PHRs triggering subframe; and 2) a rule that chooses one subframe among all subframes meeting the above condition. One example for the rule is the subframe closest to the PH reporting subframe is chosen; another example is that the subframe that occurs earliest among all others is chosen. The virtual PH is obtained based on a reference-scheduling configuration, e.g., number of scheduled resource blocks, maximum power reduction (MPR), additional MPR (A-MPR), etc. instead of an actual scheduling information. The PH of a subframe set is obtained no matter the PH is virtual or is based on actual scheduling information.

In one example of Rule 1 and case (b), suppose there are k subframe sets are configured. The PHR of subframe set n is obtained and reported at the same subframe that meets all the of following conditions: 1) The UE has UL resources allocated for new transmission for this subframe; 2) This subframe belongs to subframe set n and occurs no earlier than the subframe in which PHRs are triggered; and 3) A rule that chooses one subframe among all subframes meeting the above two conditions. One example of the rule is the subframe closest to the subframe in which PHRs are triggered is selected; another example is that the subframe that occurs first among all others is selected. Upon PH reporting, the PHR triggering of a subframe set is canceled at the subframe in which the PHR of the subframe is reported. In addition, the *periodicPHR-Timer* and the *prohibitPHR-Timer* are restarted at the subframe in which the first PHR reporting occurs after PHR triggering.

Figure 9 illustrates an example of a PH MAC control element carrying PH for subframe set n1. With *extendedPHR* not configured, consider the subframe in which the PHR is obtained and reported. Assume it is subframe set n1 whose PHR is obtained and reported. The PH MAC control element is defined in Figure 9, where the field of PH carries the PH of subframe set n1.

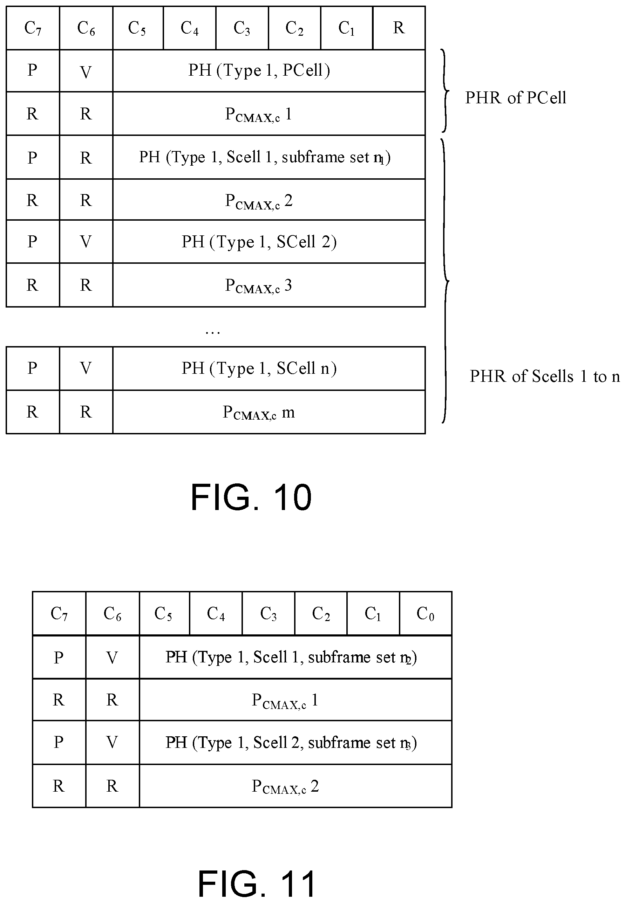

Figure 10 illustrates an example of an extended PH MAC control element delivering PH for subframe set nl of SCell1 with other PHRs. With *extendedPHR* configured, consider the subframe in which the PHR is obtained and reported. Assume SCell1 is an adaptive TDD enabled component carrier, and it is subframe set n1 whose PHR is obtained and reported. The PH MAC control element is defined in Figure 10, where the PHR of subframe set n1 of SCell1 along with other PHRs are delivered in the MAC control element. Since the PH for subframe n1 of SCell1 cannot be a virtual PHR, the bit for 'V' field is change to 'R' field.

Figure 11 illustrates an example of an extended PH MAC control element delivering PHRs for different subframe sets of different cells. With *extendedPHR* configured, assume SCell1 and SCell2 are adaptive TDD enabled component carriers. Consider the subframe in which the PHR of subframe set n2 of SCell1 and subframe set n3 of SCell2 are obtained and reported. The PH MAC control element is defined in Figure 11, where the PHRs of subframe set n2 of SCell1 and of subframe set n3 of SCell2 are delivered. Note that the field $C_0$ (instead of R) is used to indicate whether PHR of PCell is delivered in the MAC control element.

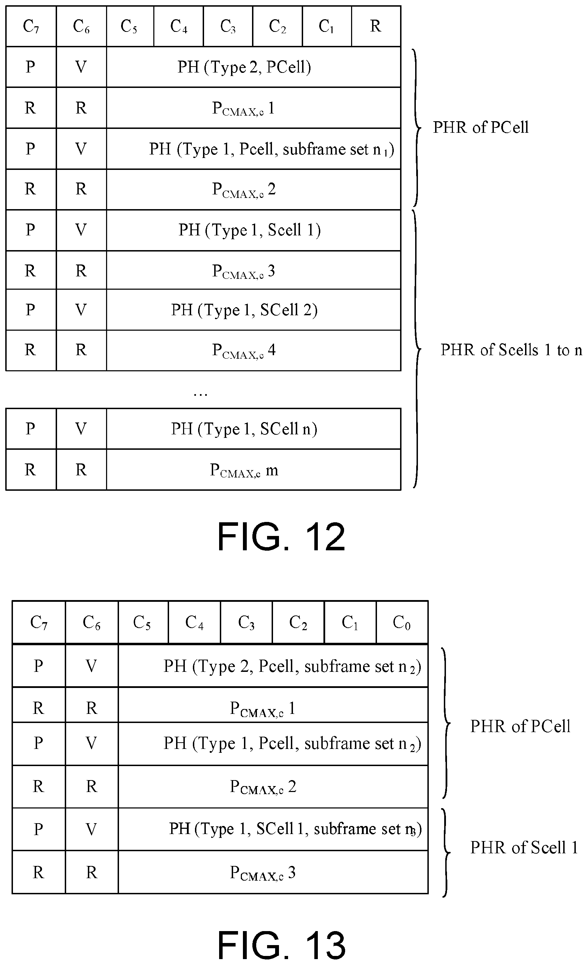

Figure 12 illustrates an example of an extended PH MAC control element when PCELL is adaptive TDD enabled. With *extendedPHR* configured, consider the subframe in which the PHR is triggered. If the UE is configured with simultaneous PUCCH and PUSCH, a Type 2 PHR for PCell is always reported when Type 1 PHR is reported. Figure 12 shows the MAC control element when PCell is an adaptive TDD enabled component carrier, and the number of configured subframe sets for PCell is k, and it is subframe set n1 whose PHR is triggered.

Figure 13 illustrates an example of an extended PH MAC control element when both PCELL and SCELL1 are adaptive TDD enabled component carriers. With *extendedPHR* configured, assume PCell and SCell1 are adaptive TDD enable component carriers. Consider the subframe in which the PHR of subframe set n2 of PCell and subframe set n3 of SCell1 are obtained and reported. The PH MAC control element is defined in Figure 13, where the PHRs of subframe set n2 of PCell (both Type 2 and Type 1) and of subframe set n3 of SCell1 are delivered. Note that the field $C_0$ (instead of R) is used to indicate whether the PHR for PCell is delivered in the MAC control element.

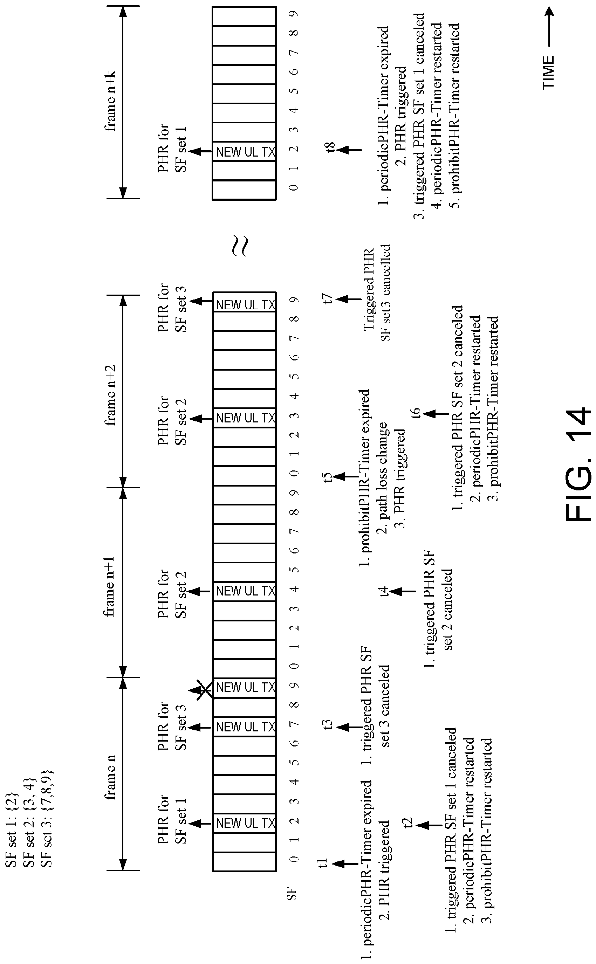

Figure 14 illustrates one example of PH reporting procedure in an adaptive TDD system for case (b). Three subframe sets {2}, {3, 4}, and {7, 8, 9} are configured for subframe sets 1, 2, and 3 respectively. It is assumed that no carrier aggregation is configured. At time t1, *periodicPHR-Timer* expires at subframe 0 of frame n, and PHRs of subframe sets 1, 2, and 3 are all triggered in that subframe. At subframe 2 of the same frame, the UE has a new UL transmission. Since subframe 2 belongs to subframe set 1, the PHR for subframe set 1 is reported at subframe 2 of frame n (time t2), and the triggering for PHR of subframe set 1 is canceled. The *prohibitPHR-Timer* and *periodicPHR-Timer* are restarted at the same subframe because a PHR has been reported. Note that the two timers are restarted upon the first PH reporting of a PHR triggering.

At time t3, at subframe 7 of frame n, the UE has a new UL transmission. Since subframe 7 belongs to subframe set 3, and the PHR of subframe set 3 has been triggered and not canceled, the PHR of subframe set 3 is reported. At the same subframe, the trigger of the PHR for subframe set 3 is canceled. At subframe 9 of frame n, the UE has a new UL transmission. Since subframe 9 belongs to subframe set 3, and the PHR of subframe set 3 had been canceled, the PHR of subframe set 3 is not reported. At time t4, at subframe 4 of frame n+1, the UE has a new UL transmission. Since subframe 4 belongs to subframe set 2, and the PHR of subframe set 2 has been triggered and not canceled, the PHR of subframe set 2 is reported. At the same subframe, the trigger of the PHR for subframe set 2 is canceled.

At time t5, *prohibitPHR-Timer* has expired at subframe 0 of frame n+2, and the path loss has changed more than *dl-PathlossChange* dB since the last transmission of a PHR. PHRs of all subframe sets are triggered at that subframe. At subframe 3 of the same frame, the UE has a new UL transmission. The PHR for subframe set 2 is reported at subframe 3 of frame n+2 (time t6). At the same subframe, the PHR triggering of subframe set 2 is canceled, and the *prohibitPHR-Timer* and *periodicPHR-Timer* are restarted.

At time t7, at subframe 9 of frame n+2, the UE has a new UL transmission. At that subframe, the PHR of subframe set 3 is reported, and the trigger of the PHR for subframe set 3 is canceled. At time t8, at subframe 2 of frame n+k, *periodicPHR-Timer* expires, and the UE has a new UL transmission. Therefore, at the subframe, all PHRs are triggered, and the PHR for subframe set 1 is reported. In addition, PHR for subframe set 1 is canceled, and *periodicPHR-Timer* and *prohibitPHR-Timer* are restarted at the same subframe. Note that the PHR of subframe set 1 triggered at subframe 0 of frame *n+2* has not been reported before another trigger occurred at subframe 2 of frame *n+k*. For this subframe set, its PHR state is 'triggered' upon the triggering at subframe 2 of frame *n+k,* and the state is kept the same (i.e., 'triggered') after the new triggering. This does not affect the PH reporting procedure.

A timer *subframeSetWaitingPHR-Timer* is (re)started when PHRs are triggered. If the PH of subframe set n has not been obtained when the timer expires, then two options can be adopted. In a first option, the PHR for the subframe set n is omitted. In a second option, a virtual PH of the subframe set is obtained at the subframe meeting the following conditions: 1) this subframe belongs to subframe set n and occurs no earlier than the subframe in which PHRs are triggered; and 2) a rule that chooses one subframe among all subframes meeting the above condition. One example for the rule is the subframe closest to the subframe in which PHRs are triggered is selected; another example is that the subframe that occurs first among all others is selected. The virtual PH of the subframe set is reported at one PH reportable subframe. In this case, it is allowed to have more than one PHs reported in one subframe.

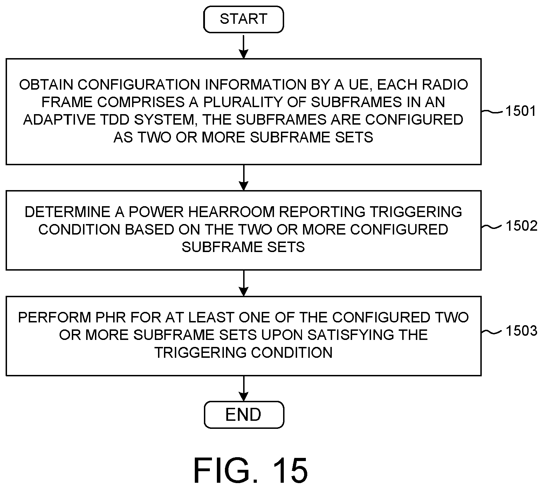

Figure 15 is a flow chart of a method of PH reporting in accordance with one novel aspect. In step 1501, a UE obtains configuration information from a base station in an adaptive TDD system. Each radio frame comprises a plurality of subframes, which are configured into two or more subframe sets. In step 1502, the UE determines a power headroom reporting triggering condition. In step 1503, the UE performs PHR for at least one of the configured two or more subframe sets upon satisfying the triggering condition.

**Timing Relation between TPC Command and UE Transmit Power Adjustment**

In adaptive TDD systems, the TDD UL-DL configuration may change frequently, causing ambiguity of the timing relation between a previous TPC command and a subsequent UE transmit power adjustment in closed-loop power control mechanism. In accordance with one novel aspect, HARQ reference configuration is used in determining the timing relation between the TPC command and the UE transmit power adjustment.

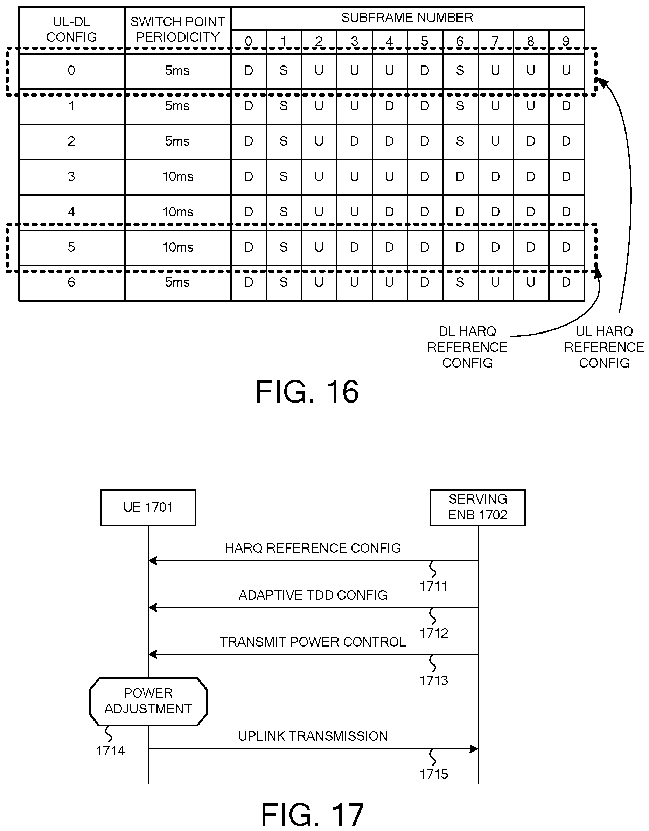

Figure 16 illustrates the concept of HARQ reference configuration in adaptive TDD systems. In order to deal with the Hybrid Automatic Repeat-reQuest (HARQ) feedback in the transition of TDD UL-DL configuration changes, an eNB may configure a DL HARQ reference configuration and a UL HARQ reference configuration to adaptive TDD enabled UEs. The DL HARQ reference configuration is one of the seven TDD UL-DL configurations with the most schedulable DL subframes and is used as UL HARQ reference timing (the timing where a UE sends the HARQ feedback for the DL transmission to the serving eNB), while the UL HARQ reference configuration is one of the seven TDD UL-DL configurations with the most schedulable UL subframes and is used as DL HARQ reference timing (the timing where a UE expects the HARQ feedback for the UL transmission from the serving eNB).

In the example of Figure 16, TDD UL-DL configuration 5 may be configured as the DL HARQ reference configuration, and TDD UL-DL configuration 0 may be configured as the UL HARQ reference configuration. DL and UL HARQ reference configurations are expected to change semi-statically. With the DL and UL HARQ reference configurations, it can avoid the discontinuity of HARQ processes during the transition of TDD configurations. Furthermore, the DL and UL HARQ reference configuration can be used in closed-loop power control to solve the ambiguity of the timing relation between a previous TPC command and a subsequent UE transmit power adjustment.

Figure 17 illustrates a procedure of UE transmit power adjustment in an adaptive TDD system in accordance with one novel aspect. In step 1711, UE 1701 receives HARQ reference configuration from eNB 1702. For example, DL/UL HARQ reference configuration may be broadcasted to UE via SIB1. In step 1712, UE 1701 receives adaptive TDD configuration information from eNB 1702. For example, an actual TDD configuration may be signaled to UE via PDCCH. In step 1713, UE 1701 receives a transmit power control (TPC) command from eNB 1702 in a previous subframe. In step 1714, UE 1701 determines transmit power adjustment for a subsequent subframe. In one example, the HARQ reference configuration is used to determine the timing relationship between the previous subframe of the TPC command and the subsequent subframe of the transmit power adjustment. In step 1715, UE 1701 performs uplink transmission in the subsequent subframe using transmit power adjusted based on the TPC command.

According to 3GPP TS 36.213 section 5.1.1.1, TPC command $\delta_{\text{PUSCH},c}$ is a correction value and is included in a physical DL control channel (PDCCH)/enhanced physical DL control channel (EPDCCH) with DL control information (DCI) format 0/4 for serving cell $c$ or jointly coded with other TPC commands in PDCCH with DCI format 3/3A whose cyclic redundancy check (CRC) parity bits are scrambled with TPC-PUSCH-RNTI.

The PUSCH power control adjustment state for serving cell $c$ is given by $f_c(i)$ which is defined by:

$$f_c(i) = f_c(i-1) + \delta_{\text{PUSCH},c}(i - K_{\text{PUSCH}}) \quad (3)$$

if accumulation is enabled based on the parameter *Accumulation-enabled* provided by higher layers or if the TPC command $\delta_{\text{PUSCH}, c}$ is included in a PDCCH/EPDCCH with DCI format 0 for serving cell $c$ where the CRC is scrambled by the Temporary C-RNTI, where $\delta_{\text{PUSCH},c}(i-K_{\text{PUSCH}})$ was signaled on PDCCH/EPDCCH with DCI format 0/4 or PDCCH with DCI format 3/3A on subframe $i-K_{\text{PUSCH}}$, and where $f_c(0)$ is the first value after reset of accumulation.

The PUSCH power control adjustment state for serving cell c is given by $f_c(i)$ defined by:

$$f_c(i) = \delta_{\text{PUSCH},c}(i - K_{\text{PUSCH}}) \quad (4)$$

if accumulation is not enabled for serving cell $c$ based on the parameter *Accumulation-enabled* provided by higher layers where the TPC command $\delta_{\text{PUSCH},c}(i-K_{\text{PUSCH}})$ was signaled on PDCCH/EPDCCH with DCI format 0/4 for serving cell $c$ on subframe $i-K_{\text{PUSCH}}$.

The PUCCH power control adjustment state $g(i)$ is given as:

$$g(i) = g(i-1) + \sum_{m=0}^{M-1} \delta_{PUCCH}(i - k_m) \quad (5)$$

where the definition of symbols in equation (5) can be found in 3GPP TS 36.213.

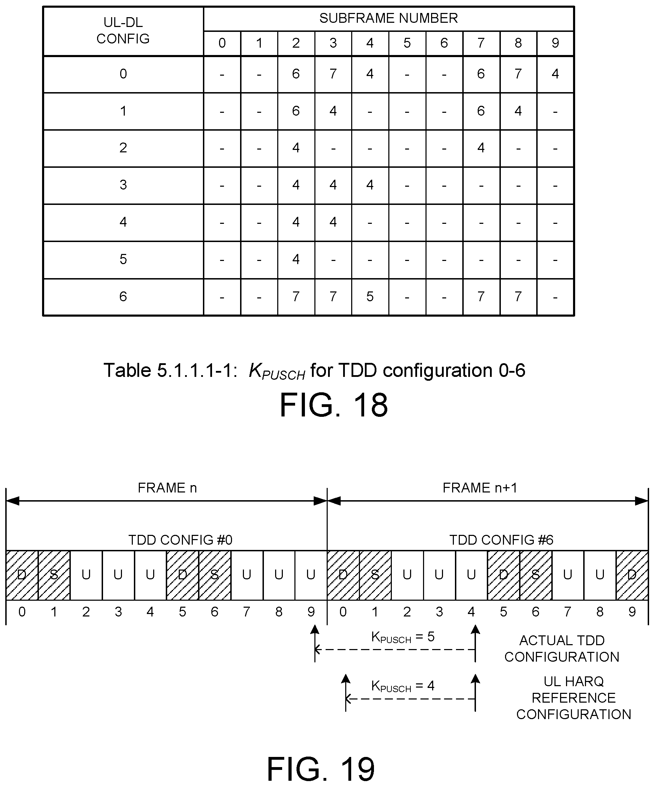

Figure 18 illustrates the timing relations between TPC command and UE transmit power adjustment for different TDD configurations. In an LTE TDD system, the values of $K_{PUSCH}$, $k_m$, and $M$ in equations (3)-(5) are dependent on the TDD UL-DL configuration of the cell. As illustrated in Figure 18, for example, the value of $K_{PUSCH}$ is dependent on the TDD configurations. In an adaptive TDD system, the TDD UL-DL configuration may change frequently, and ambiguity of the values of $K_{PUSCH}$, $k_m$, and $M$ may occur.

Figure 19 illustrates one example of the timing relation between a TPC command and UE power adjustment. For example, suppose the TDD UL-DL configuration is #0 at frame $n$ and is changed to #6 at frame $n+1$. For PUSCH power control, at subframe $i=4$ of frame $n+1$, we have $K_{PUSCH} = 5$ according to TDD UL-DL configuration #6. However, subframe $i$-$K_{PUSCH}$, i.e., subframe 9 of frame $n$, is an UL subframe according to TDD UL-DL configuration 0, and there is no TPC command $\delta_{PUSCH,c}$ ($i$-$K_{PUSCH}$) issued at that subframe. However, because UL HARQ reference configuration has the most UL schedulable subframes and the least DL schedules subframes, UL HARQ reference configuration can be used as the reference configuration for UL power control purposes. For example, if an UL HARQ reference configuration, e.g., TDD UL-DL configuration #0 is used as the reference configuration for UL power control, we have $K_{PUSCH}$ = 4 according to TDD UL-DL configuration #0. As a result, subframe $i$-$K_{PUSCH}$, i.e., subframe 0 of frame $n+1$, is a DL subframe, and the UE is able to decoded its TPC command $\delta_{PUSCH,c}$($i$-$K_{PUSCH}$) from that subframe.

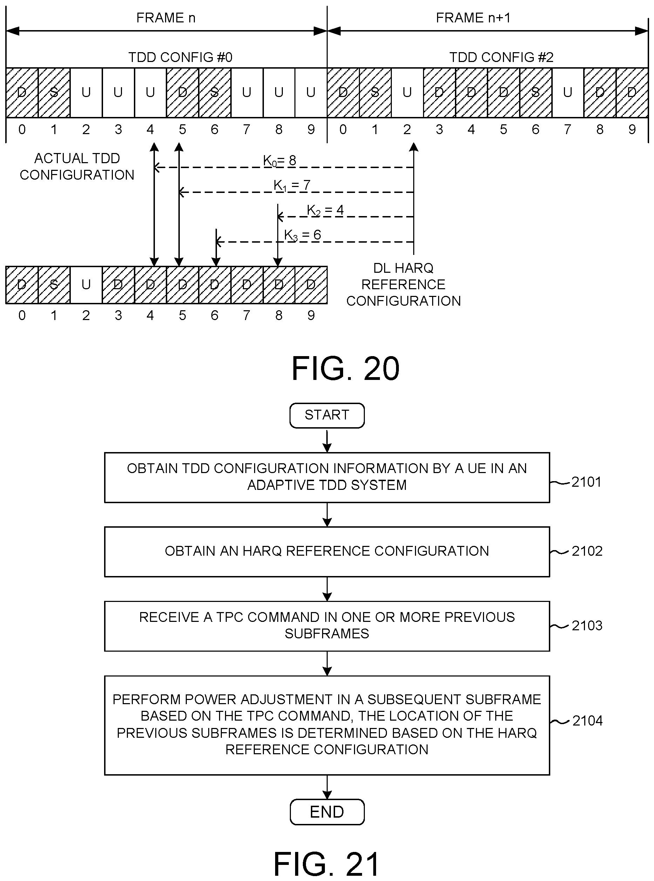

Figure 20 illustrates another example of the timing relation between a TPC command and UE power adjustment. Suppose the TDD UL-DL configuration is #0 at frame $n$ and is switched to TDD UL-DL configuration #2 at frame $n+1$. For PUCCH power control, at subframe $i=2$ of frame $n+1$, we have $(k_0, k_1, k_2, k_3)$=(8, 7, 4, 6) according to TDD UL-DL configuration #2. However, subframes $i$-$k_m$ for $m$=0, 2, i.e., subframes 4, 8 of frame $n$, are UL subframes according to TDD UL-DL configuration #0, and there are no TPC commands $\delta_{PUCCH}$($i$-$k_m$) issued at those subframes. However, if a DL HARQ reference configuration, e.g., TDD UL-DL configuration #5 is applied, subframes $i$-$k_m$ for $m$=0, 1, 2, 3, i.e., subframes 4, 5, 8, 6, of frame $n$, are all DL subframes according to TDD UL-DL configuration #5, and the UE is able to decoded its TPC commands $\delta_{PUCCH}$($i$-$k_m$) from those subframes.

Figure 21 is a flow chart of a method of UE transmit power adjustment based on TPC command in adaptive TDD systems in accordance with one novel aspect. In step 2101, a UE obtains TDD configuration information in an adaptive TDD system. In step 2102, the UE obtains an HARQ reference configuration. In step 2103, the UE receives a transmit power control (TPC) command in one or more previous subframes. In step 2103, the UE performs power adjustment in a subsequent subframe based on the TPC command. The location of the previous subframes is determined based on the HARQ reference configuration.

## Separate Accumulation OF UE Transmit Power Adjustment

In LTE, the UE transmit power $P_{PUSCH,c}(i)$ for the PUSCH transmission in subframe i for the serving cell $c$ is given by

$$P_{PUSCH,c}(i) = \min \begin{Bmatrix} P_{CMAX,c}(i), \\ 10\log_{10}(M_{PUSCH,c}(i)) + P_{O\_PUSCH,c}(j) + \alpha_c(j) \cdot PL_c + \Delta_{TF,c}(i) + f_c(i) \end{Bmatrix} \text{ [dBm]} (6)$$

If serving cell $c$ is the primary cell, the setting of the UE transmit power $P_{PUCCH}$ for the PUCCH transmission in subframe $i$ is defined by

$$P_{PUCCH}(i) = \min \begin{Bmatrix} P_{CMAX,c}(i), \\ P_{0\_PUCCH} + PL_c + h(n_{CQI}, n_{HARQ}, n_{SR}) + \Delta_{F\_PUCCH}(F) + \Delta_{TxD}(F') + g(i) \end{Bmatrix} \text{ [dBm]} (7)$$

The setting of the UE Transmit power $P_{SRS}$ for the sounding reference symbol transmitted on subframe $i$ for serving cell c is defined by

$$P_{SRS,c}(i) = \min \begin{Bmatrix} P_{CMAX,c}(i), \\ P_{SRS\_OFFSET,c}(m) + 10\log_{10}(M_{SRS,c}) + P_{O\_PUSCH,c}(j) + \alpha_c(j) \cdot PL_c + f_c(i) \end{Bmatrix} \text{ [dBm] } (8)$$

The definitions of the symbols in equations (6)-(8) are given in 3GPP TS 36.213.

The physical meaning of $P_{O\_PUSCH,c}(j)$ and $P_{O\_PUCCH}$ in equations (6)-(8) represents the required receive PUSCH and PUCCH power per resource block conditioned on a certain level of the interference-plus-noise, respectively. Since the interference level keeps changing, the closed-loop TPC command is issued by the network to adjust the UE transmit power to compensate for the interference level variation. For different subframe sets, the average interference levels may be quite different. Therefore, the closed-loop TPC command may not be able to catch up with the interference level variations. To solve the problem that the closed-loop TPC command cannot act fastly enough to attain the same progress as the interfrence level changes, the following methods are proposed: Separate open-loop power control parameters including $P_{O\_PUSCH,c}(j)$, $P_{O\_PUCCH}$, and $\alpha_c(j)$ are configured for each subframe set.

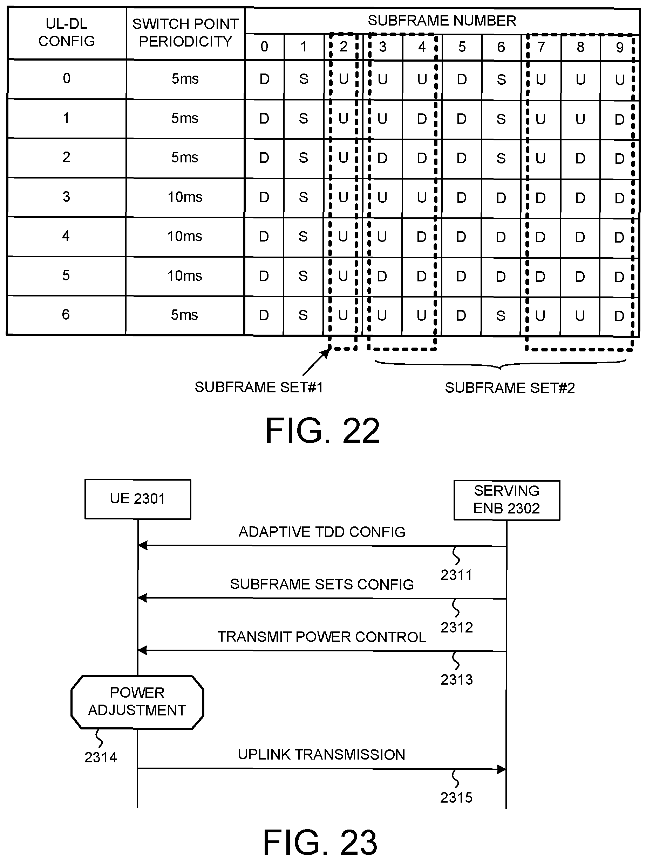

Figure 22 illustrates different subframe sets in adaptive TDD systems for UL power control. In the example of Figure 22, two subframe sets are configured. The first subframe set #1 contains subframe {2} while the second subframe set #2 contains subframe {3, 4, 7, 8, 9}. For example, in the formulas governing UE transmit powers, i.e., equations (6)-(8), the open-loop power control parameters $P_{O\_PUSCH,c}(j)$, $P_{O\_PUCCH}$, and $\alpha_c(j)$ are replaced with $P_{O\_PUSCH,c}^{(n)}(j)$, $P_{O\_PUCCH}^{(n)}$, and $\alpha_c^{(n)}(j)$ for subframe set $n$, respectively, and they are separately configured for each subframe set.

Consider two subframe sets, called the first and the second subframe sets. Let us denote the interference levels of the two subframe sets during a time period as $\{F(i):i\in I_1\}$ and $\{G(i):i\in I_2\}$, where $i$ is the subframe index, and $I_1$ and $I_2$ denote the set of subframes belonging to the first and second subframe sets during the period of time, respectively. Let us further define

$$H(i) = \begin{cases} F(i), & i \in I_1 \\ G(i) - A, & i \in I_2 \end{cases}$$

where A is equal to the open-loop power control parameter $P_{O\_PUSCH,c}(j)$ (or $P_{O\_PUCCH}$) of the second subframe set subtracted by that of the first subframe set for PUSCH (or PUCCH). If $\{H(i):i\in I_1\cup I_2\}$ cannot be suitably compensated for by the closed-loop PUSCH TPC commands $\{f_c(i):i\in I_1\cup I_2\}$ due to the abrupt change of $H(i)$ when switching from one subframe set to the other, then the variation of interference levels along subframes $I_1\cup I_2$ cannot be tracked by the closed-loop TPC commands issued for subframes $I_1\cup I_2$, and the received PUSCH quality deteriorates.

Similarly, if $\{H(i):i\in I_1\cup I_2\}$ cannot be suitably compensated for by the PUCCH closed-loop TPC commands $\{g(i):i\in I_1\cup I_2\}$ due to the abrupt change of $H(i)$ when switching from one subframe set to the other, then the variation of interference levels along subframes $I_1\cup I_2$ cannot be tracked by the closed-loop TPC commands issued for subframes $I_1\cup I_2$, and the received PUCCH quality deteriorates. Therefore, on top of the separate open-loop power control for each subframe set, separate closed-loop TPC commands for each subframe set is proposed.

Figure 23 illustrates a procedure of separate accumulation in closed-loop power control in accordance with one novel aspect. In step 2311, UE 2301 receives adaptive TDD configuration from eNB 2302. In step 2312, UE 2301 receives subframe sets configuration from eNB 2302. For example, the network configures subframes {2} and {3, 4, 7, 8, 9} as the first and second subframe sets, respectively. In step 2313, UE 2301 recieves a transmit power control (TPC) command from eNB 2302. In step 2314, UE 2301 performs uplink power adjustment based on the TPC command for uplink subframe i, which belongs to subframe set n. If accumulation of TPC command is enabled, then UE 2301 performs the power adjustment accumulation based on a power control adjustment state of a previous subframe (i-1), if subframe (i-1) belongs to the same subframe set n. However, if subframe (i-1) does not belong to subframe set n, then the power adjustment is accumulated based on a power control adjustment state of a previous subframe j, where subframe j is the closes previous uplink subframe that belongs to subframe set n. In step 2315, UE 2301 performs uplink transmission in subframe i using the adjusted uplink transmit power.

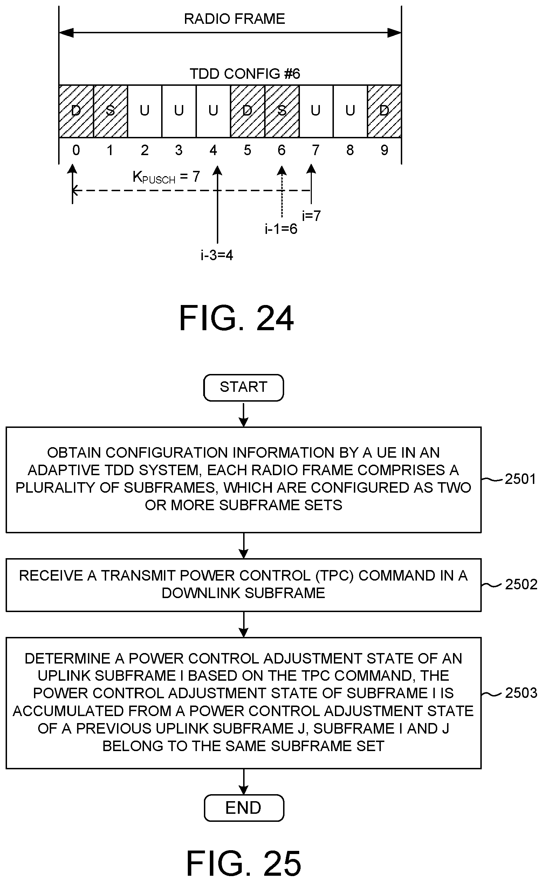

Figure 24 illustrates one example of separate accumulation in PUSCH closed-loop power control in adaptive TDD systems. In one example, accumulation of TPC command is enabled based on the parameter *Accumulation-enalbed* provided by higher layers of if the TPC command is included in a PDCCH with DCI format 0 for serving cell c where the CRC is scrambled by the temporary C-RNTI. The UE transmit power for the PUSCH transmission in subframe i for the serving cell $c$ is given by

$$P_{PUSCH,c}(i) = \min \begin{cases} P_{CMAX,c}(i), \\ 10\log_{10}(M_{PUSCH,c}(i)) + P_{O\_PUSCH,c}(j) + \alpha_c(j) \cdot PL_c + \Delta_{TF,c}(i) + f_c^{(n)}(i) \end{cases}$$
$$[dBm]$$

If i belongs to subframe set n, where the power control adjustment state is

$$f_c^{(n)}(i) = f_c^{(n)}(i-1) + \delta_{\text{PUSCH},c}(i-K_{\text{PUSCH}}) \cdot$$ If subframe $i$ - 1 does not belong to subframe set $n$, or if there is no PDCCH with DCI format 0/4 decoded for subframe $i$-1 of serving cell $c$, or if subframe $i$-1 is not even an uplink subframe, then

$$f_c^{(n)}(i-1) = f_c^{(n)}(i-2).$$

In the example of Figure 24, the UE applies TDD configuration #6 and the network configures subframes {2} and {3, 4, 7, 8, 9} as the first and second subframe sets, respectively. The UE adjusts uplink power in subframe (i=7), which belongs to the second subframe set. The UE receives TPC command $\delta_{PUSCH,c}(i\text{-}K_{PUSCH})$ in subframe 0, where $K_{PUSCH}$ = 7 for TDD configuration #6. The UE power control adjustment state is

$$f_c^{(n)}(i) = f_c^{(n)}(i-1) + \delta_{\text{PUSCH},c}(i-K_{\text{PUSCH}}) \cdot$$ However, subframe ((i-1)=6) is not an uplink subframe, and does not belong to the same subframe set. The closest previous uplink subframe that belongs to the second subframe set is subframe ((i-3)=4). Therefore, the UE power control adjustment state is $f_c^{(n)}(i\text{-}1) = f_c^{(n)}(i\text{-}2) = f_c^{(n)}(i\text{-}3),$ because subframe 4 belongs to the second subframe set, assuming there is PDCCH with DCI format 0/4 decoded for subframe 4. The intention is to keep the power control unchanged at subframes in which no TPC command is given, and to keep separate power control accumulation for different subframe sets.

Similarly, the UE transmit power for the PUCCH transmission in subframe $i$ for the serving cell $c$ is given by

$$P_{\text{PUCCH}}(i) = \min \begin{Bmatrix} P_{\text{CMAX},c}(i), \\ P_{0\_\text{PUCCH}} + PL_c + h(n_{CQI}, n_{HARQ}, n_{SR}) + \Delta_{\text{F\_PUCCH}}(F) + \Delta_{TxD}(F') + g^{(n)}(i) \end{Bmatrix} [\text{dBm}]$$

If $i$ belongs to subframe set $n$, where the power control adjustment state is

$$g^{(n)}(i) = g^{(n)}(i-1) + \sum_{m=0}^{M-1} 1_{i-k_m \in I_n} \cdot \delta_{\text{PUCCH}}(i-k_m),$$ $k_m$ is the same as that given in 3GPP TS 36.213, and $1_{i-k_m \in I_n}$ is an indicator function equal to 1 when subframe $i$-$k_m$ belongs to subframe set $n$ and equal to 0 otherwise. For separate accumulation, if subframe $i$-1 does not belong to subframe set $n$ or if subframe $i$-1 is not an uplink subframe, then

$$g^{(n)}(i-1) = g^{(n)}(i-2).$$

Figure 25 is a flow chart of a method of separate accumulation in closed-loop power control in adaptive TDD systems in accordance with one novel aspect. In step 2501, a UE obtains configuration information from a base station in an adaptive TDD system. Each radio frame comprises a plurality of subframes, which are configured into two or more subframe sets. In step 2502, the UE receives a transmit power control (TPC) command in a downlink subframe. In step 2503, the UE determines a power control adjustment state for an uplink subframe i based on the TPC command. The power control adjustment state of subframe i is accumulated from a power control adjustment state of a previous uplink subframe j, where subframe i and subframe j belong to the same subframe set.

Although the present invention has been described in connection with certain specific embodiments for instructional purposes, the present invention is not limited thereto. Accordingly, various modifications, adaptations, and combinations of various features of the described embodiments can be practiced without departing from the scope of the invention as set forth in the claims.

**Claims**

1. A method comprising:

obtaining (2101) Time Division Duplexing, TDD, configuration information by a user equipment, UE, in an adaptive TDD system;

obtaining (2102) a hybrid automatic repeat request, HARQ, reference configuration;
receiving (2103) a transmit power control, TPC, command in one or more previous subframes; and
**characterized by**
performing power adjustment (2104) in a subsequent subframe based on the TPC command, wherein the location of the previous subframes is determined based on the HARQ reference configuration.

2. The method of Claim 1, wherein the UE is configured with an actual TDD configuration that is independent from the HARQ reference configuration.

3. The method of Claim 1 or 2, wherein each TDD configuration has predefined time relation between a TPC command subframe and a power adjustment subframe.

4. The method of any of the Claims 1 to 3, wherein the TPC command is for Physical uplink shared channel, PUSCH, power control or wherein the TPC command is for Physical uplink control channel, PUCCH, power control.

5. The method of Claim 4, wherein the HARQ reference configuration is an uplink, UL, HARQ reference configuration with the most schedulable UL subframes.

6. The method of Claim 4 or 5, wherein the HARQ reference configuration is a downlink, DL, HARQ reference configuration with the most schedulable DL subframes.

7. The method of any of the Claims 1 to 6, wherein the previous subframes belong to a first radio frame, wherein the subsequent subframe belongs to a second radio frame, and wherein the first radio frame and the second radio frame have different TDD configurations.

8. The method of any of the Claims 1 to 7, wherein the UE decodes the TPC command via monitoring a physical downlink control channel, PDCCH, in the previous subframes.

9. A User Equipment, UE, comprising:

   a Time Division Duplexing, TDD, configuration module (415) that obtains TDD configuration information in an adaptive TDD system;
   a hybrid automatic repeat request, HARQ, configuration module that obtains an HARQ reference configuration;
   a receiver that receives a transmit power control, TPC, command in one or more previous subframes; and
   **characterized by**:

      a power adjustment module that performs power adjustment in a subsequent subframe based on the TPC command, wherein the location of the previous subframes is determined based on the HARQ reference configuration.

10. The UE of Claim 9, wherein the UE is configured with an actual TDD configuration that is different from the HARQ reference configuration.

11. The UE of Claim 9 or 10, wherein each TDD configuration has predefined time relation between a TPC command subframe and a power adjustment subframe.

12. The UE of any of the Claims 9 to 11 , wherein the TPC command is for Physical uplink shared channel, PUSCH, power control; or wherein the TPC command is for Physical uplink control channel, PUCCH, power control.

13. The UE of Claim of any of the claims 9 to 12, wherein the HARQ reference configuration is an uplink, UL, HARQ reference configuration with the most schedulable UL subframes
and/or
wherein the HARQ reference configuration is a downlink, DL, HARQ reference configuration with the most schedulable DL subframes.

14. The UE of any of the Claims 9 to 13, wherein the previous subframes belong to a first radio frame, wherein the subsequent subframe belongs to a second radio frame, and wherein the first radio frame and the second radio frame have different TDD configurations.

**15.** The UE of any of the Claims 9 to 14, wherein the UE decodes the TPC command via monitoring a physical downlink control channel, PDCCH, in the previous subframes.

**Patentansprüche**

**1.** Verfahren, umfassend:

Erhalten von (2101) Time Division Duplexing, TDD, Konfigurations- Informationen durch ein Benutzergerät, UE, in einem adaptiven TDD- System;
Erhalten (2102) einer hybriden automatischen Wiederholungsanfrage-, HARQ, Referenz- Konfiguration;
Empfangen (2103) einer Sendeleistungs- Steuerungs- TPC, Befehls in einem oder mehreren vorhergehenden Unterrahmen; und
**gekennzeichnet durch**
Durchführen einer Leistungsanpassung (2104) in einem nachfolgenden Unterrahmen auf der Grundlage des TPC- Befehls, wobei die Position der vorherigen Unterrahmen auf der Grundlage der HARQ- Referenz-Konfiguration bestimmt wird.

**2.** Das Verfahren nach Anspruch 1, wobei die UE mit einem aktuellen TDD- Konfiguration konfiguriert, die unabhängig von der HARQ- Referenz- Konfiguration ist.

**3.** Das Verfahren nach Anspruch 1 oder 2, wobei jede TDD- Konfiguration eine vordefinierte Zeitbeziehung zwischen einem TPC- Befehls- Unterrahmen und einem Leistungsanpassungs- Unterrahmen aufweist.

**4.** Das Verfahren nach einem der Ansprüche 1 bis 3, wobei der TPC- Befehl eine physikalische gemeinsamen Uplink-Kanal-, PUSCH, Leistungsregelung ist oder
wobei der TPC- Befehl eine physikalische Uplink- Kontroll- Kanal-, PUCCH, Leistungsregelung ist.

**5.** Das Verfahren nach Anspruch 4, wobei die HARQ- Referenz- Konfiguration eine Datenübermittlung, UL, HARQ-Referenz- Konfiguration mit den planbarsten UL- Unterrahmen ist.

**6.** Das Verfahren nach Anspruch 4 oder 5, bei dem die HARQ- Referenz- Konfiguration eine Downlink-, DL, HARQ- Referenz- Konfiguration mit den planbarsten DL- Unterrahmen ist.

**7.** Das Verfahren nach einem der Ansprüche 1 bis 6, wobei die vorhergehenden Unterrahmen zu einem ersten Funkrahmen gehören, wobei der nachfolgende Unterrahmen zu einem zweiten Funkrahmengehört, wobei der erste Funkrahmen und der zweite Funkrahmen verschiedene TDD- Konfigurationen haben.

**8.** Das Verfahren nach einem der Ansprüche 1 bis 7, wobei die UE den TPC- Befehl durch Überwachung eines physikalischen - gemeinsamen Downlink- Kontroll- Kanal, PDCCH, in den vorherigen Unterrahmen dekodiert.

**9.** Eine Benutzerendgerät, UE, bestehend aus:

einem Zeitmultiplex- Duptex-, TDD-, Konfigurationsmodul (415), das TDD- Konfigurations- Informationen in einem adaptiven TDD- System erhält;
eine hybrides automatisches Wiederholungsanfrage-, HARQ, Konfigurationsmodul, das eine HARQ- Referenz-Konfiguration erhält;
einen Empfänger, der eine Sendeleistungsregelungs-, TPC, Kommando in einem oder mehreren vorhergehenden Unterrahmen empfängt; und
**gekennzeichnet durch**
ein Leistungsanpassungsmodul, das die Leistungsanpassung in einem nachfolgenden Unterrahmen auf der Grundlage des TPC- Befehls durchführt, wobei die Position der vorherigen Unterrahmen auf der Grundlage der HARQ- Referenz- Konfiguration bestimmt wird.

**10.** Das UE nach Anspruch 9, wobei die UE mit einer aktuellen TDD- Konfiguration konfiguriert ist, die sich von der HARQ- Referenz- Konfiguration unterscheidet.

**11.** Das UE nach Anspruch 9 oder 10, wobei jede TDD- Konfiguration eine vordefinierte Zeitbeziehung zwischen einem TPC- Befehls- Unterrahmen und einem Leistungsanpassungs- Unterrahmen aufweist.

12. Das UE nach einem der Ansprüche 9 bis 11, wobei der TPC- Befehl für eine physikalische gemeinsame Uplink- Kanal-, PUSCH, Leistungssteuerung ist;
oder wobei der TPC- Befehl für eine physikalische gemeinsame Uplink- Kanal, PUCCH, Leistungssteuerung ist.

13. Das UE nach einem der Ansprüche 9 bis 12, wobei die HARQ- Referenz- Konfiguration eine Uplink-, UL, HARQ- Referenz- Konfiguration mit den planbarsten UL- Unterrahmen ist
und/oder
wobei die HARQ- Referenz- Konfiguration eine Downlink-, DL-, HARQ- Referenz- Konfiguration mit den planbarsten DL- Unterrahmen ist.

14. Das UE nach einem der Ansprüche 9 bis 13, wobei die vorherigen Unterrahmen zu einem ersten Funkrahmen gehören, wobei der nachfolgende Unterrahmen zu einem zweiten Funkrahmen gehört und wobei der erste Funkrahmen und der zweite Funkrahmen unterschiedliche TDD- Konfigurationen aufweisen.

15. Das UE nach einem der Ansprüche 9 bis 14, wobei das UE den TPC- Befehl über die Überwachung eines physikalischen Downlink- Steuerungskanals in dem vorigen Subframen dekodiert.

**Revendications**

1. Un procédé comprenant :

   l'obtention (2101) d'une information relative à une configuration de duplex par division temporelle, TDD, de la part d'un équipement utilisateur, UE, au sein d'un système TDD adaptatif ;
   l'obtention (2102) d'une configuration de référence de requête de répétition automatique hybrid, HARQ ;
   la réception (2103) d'une instruction de commande de puissance d'émission, TPC, dans une ou plusieurs sous-trames précédentes ; et
   **caractérisé par**
   la mise en oeuvre d'un réglage de puissance (2104) dans une sous-trame subséquente sur la base de la commande TPC, dans lequel la disposition des sous-trames précédentes est déterminée sur la base de la configuration de référence HARQ.

2. Le procédé de la revendication 1, dans lequel le UE est configuré avec une configuration TDD actuelle indépendante de la configuration de référence HARQ.

3. Le procédé de la revendication 1 ou 2, dans lequel chacune des configurations TDD présente une relation temporelle prédéfinie entre une sous trame de commande TPC et une sous trame de réglage de puissance.

4. Le procédé de l'une quelconque des revendications 1 à 3, dans lequel l'instruction de commande TPC est pour une commande de puissance de canal partagé sur le lien montant physique, PUSCH, ou dans lequel la commande TPC est une commande de puissance pour le canal de commande de lien physique, PUCCH.

5. Le procédé de la revendication 4, dans lequel la configuration de référence HARQ est une configuration de référence HARQ de lien montant, UL, avec les sous-trames UL les plus programmables.

6. Le procédé de la revendication 4 ou 5, dans lequel la configuration de référence HARQ est une configuration de référence HARQ sur le lien descendant, DL, avec les sous-trames DL les plus programmables.

7. Le procédé de l'une quelconque des revendications 1 à 6, dans lequel les sous-trames précédentes appartiennent à une première trame radio, dans lequel la sous-trame suivante appartient à une seconde trame radio, et dans lequel la première trame radio et la seconde trame radio ont des configurations TDD distinctes.

8. Le procédé de l'une quelconque des revendications 1 à 7, dans lequel le UE décode la commande TPC avec un canal de commande de lien descendant physique, PDCCH, dans les sous-trames précédentes.

9. Un équipement utilisateur, UE, comprenant :

un module de configuration (415) de duplex de division temporelle, TDD, obtenant une information de configuration TDD au sein d'un système adaptatif TDD ;

un module de configuration de requête de répétition automatique hybride, HARQ, obtenant une configuration de référence HARQ ;

un récepteur recevant une commande de contrôle de transmission, TPC, dans une ou plusieurs sous-trame précédentes ; et

**caractérisé par**

un module de réglage de puissance effectuant un réglage de puissance dans une sous-trame subséquente basée sur l'instruction TCP, dans lequel la disposition des sous-trames précédentes est déterminée sur la base de la configuration de référence HARQ.

10. Le UE de la revendication 9, dans lequel le UE est configuré avec une configuration TDD actuelle qui est différente de la configuration de référence HARQ.

11. Le UE de la revendication 9 ou 10, dans lequel chacune des configurations TDD présente une relation temporelle prédéfinie entre une sous trame de commande TPC et une sous trame de réglage de puissance.

12. Le UE de l'une quelconque des revendications 9 à 11, dans lequel l'instruction de commande TPC est pour une commande de puissance de canal partagé sur le lien physique montant, PUSCH, ou dans lequel l'instruction de commande TPC est une commande de puissance pour le canal de commande de lien physique, PUCCH.

13. Le UE de l'une quelconque des revendications 9 à 12, dans lequel la configuration de référence HARQ est une configuration de référence HARQ de lien montant, UL, avec les sous-trames UL les plus programmables et/ou.

dans lequel la configuration de référence HARQ est une configuration de référence HARQ sur le lien descendant, DL, avec les sous-trames DL les plus programmables.

14. Le UE de l'une quelconque des revendications 9 à 13, dans lequel dans lequel les sous-trames précédentes appartiennent à une première trame radio, dans lequel les sous-trames suivantes appartiennent à une seconde trame radio, et dans lequel la première trame radio et la seconde trame radio ont des configurations TDD distinctes.

15. Le UD de l'une quelconque des revendications 9 à 14, dans lequel le UE décode l'instruction de commande TPC avec un canal de commande de lien descendant physique, PDCCH, dans les sous-trames précédentes.

| UL-DL CONFIG | SWITCH POINT PERIODICITY | SUBFRAME NUMBER | | | | | | | | | |
|---|---|---|---|---|---|---|---|---|---|---|---|
| | | 0 | 1 | 2 | 3 | 4 | 5 | 6 | 7 | 8 | 9 |
| 0 | 5ms | D | S | U | U | U | D | S | U | U | U |
| 1 | 5ms | D | S | U | U | D | D | S | U | U | D |
| 2 | 5ms | D | S | U | D | D | D | S | U | D | D |
| 3 | 10ms | D | S | U | U | U | D | D | D | D | D |
| 4 | 10ms | D | S | U | U | D | D | D | D | D | D |
| 5 | 10ms | D | S | U | D | D | D | D | D | D | D |
| 6 | 5ms | D | S | U | U | U | D | S | U | U | D |

# FIG. 1

# FIG. 2

UE 301

SERVING
ENB 302

CONFIGURATION IN ADAPTIVE TDD    311

POWER HEADROOM REPORT (PHR)    312

TIMING RELATION OF TPC COMMAND AND UE TX POWER
ADJUSTMENT    313

CLOSED-LOOP POWER CONTROL AND UE TX POWER    314

# FIG. 3

430    420

402    401

TDD CONFIG
MGMT    425

UL POWER
CONTROL CONFIG    426

PHR CONFIG    427

PH RECEIVING
AND MGMT    428

UL POWER
CONTROL AND
SCHEDULING    429

TRANSCEIVER    423

PROCESSOR    422

MEMORY    421
PROGRAM
& DATA    424

TRANSCEIVER    413

PROCESSOR    412

MEMORY    411
PROGRAM
& DATA    414

TDD CONFIG
MGMT    415

UL POWER
CONTROL CONFIG    416

PHR CONFIG    417

PH CALCULATION
AND REPORTING    418

UL POWER
ADJUSTMENT    419

# FIG. 4

UE 501

SERVING
ENB 502

ADAPTIVE TDD CONFIG

511

SUBFRAME SETS CONFIG

512

PHR TRIGGER
CONDITION

513

RULE 1: PHRS FOR ALL SUBFRAME SETS ARE
TRIGGERED
CASE (A): PHRS OF ALL SUBFRAME SETS ARE
REPORTED IN THE SAME SUBFRAME
CASE (B): PHRS OF DIFFERENT SUBFRAME SETS
ARE REPORTED IN DIFFERENT SUBFRAMES

514

RULE 2: ADD TRIGGER CONDITION OF CONFIG/
RECONFIG SUBFRAME SETS

515

PHR

516

## FIG. 5

| R | R | PH ( subframe set 1 ) | Oct 1 |
|---|---|---|---|
| R | R | PH ( subframe set 2 ) | Oct 2 |

...

| R | R | PH ( subframe set k ) | Oct k |

## FIG. 6

| C₇ | C₆ | C₅ | C₄ | C₃ | C₂ | C₁ | R |
|---|---|---|---|---|---|---|---|

| | | | | | | | |
|---|---|---|---|---|---|---|---|
| P | V | \multicolumn{6}{l}{PH (Type 1, PCell)} |
| R | R | \multicolumn{6}{l}{$P_{CMAX,c}$ 1} |

PHR for PCell

| | | | | | | | |
|---|---|---|---|---|---|---|---|
| P | V | \multicolumn{6}{l}{PH (Type 1, Scell 1, subframe set 1)} |
| R | R | \multicolumn{6}{l}{$P_{CMAX,c}$ 2} |
| P | V | \multicolumn{6}{l}{PH (Type 1, Scell 1, subframe set 2)} |
| R | R | \multicolumn{6}{l}{$P_{CMAX,c}$ 3} |

. . .

| | | | | | | | |
|---|---|---|---|---|---|---|---|
| P | V | \multicolumn{6}{l}{PH (Type 1, Scell 1, subframe set k)} |
| R | R | \multicolumn{6}{l}{$P_{CMAX,c}$ k+1} |

PHR for Scell 1

| | | | | | | | |
|---|---|---|---|---|---|---|---|
| P | V | \multicolumn{6}{l}{PH (Type 1, SCell 2)} |
| R | R | \multicolumn{6}{l}{$P_{CMAX,c}$ k+2} |

. . .

| | | | | | | | |
|---|---|---|---|---|---|---|---|
| P | V | \multicolumn{6}{l}{PH (Type 1, SCell n)} |
| R | R | \multicolumn{6}{l}{$P_{CMAX,c}$ m} |

PHR for Scells 2 to n

# FIG. 7A

| $C_7$ | $C_6$ | $C_5$ | $C_4$ | $C_3$ | $C_2$ | $C_1$ | R |
|---|---|---|---|---|---|---|---|
| P | V | PH (Type 2, PCell) | | | | | |
| R | R | $P_{CMAX,c}$ 1 | | | | | |
| P | V | PH (Type 1, Pcell, subframe set 1) | | | | | |
| R | R | $P_{CMAX,c}$ 2 | | | | | |
| P | V | PH (Type 1, Pcell, subframe set 2) | | | | | |
| R | R | $P_{CMAX,c}$ 3 | | | | | |

...

| P | V | PH (Type 1, Pcell, subframe set k) |
|---|---|---|
| R | R | $P_{CMAX,c}$ k+1 |
| P | V | PH (Type 1, Scell 1) |
| R | R | $P_{CMAX,c}$ k+2 |

...

| P | V | PH (Type 1, SCell n) |
|---|---|---|
| R | R | $P_{CMAX,c}$ m |

PHR for PCell

PHR for Scells 1 to n

# FIG. 7B

SF SET 1: {2}

SF SET 2: {3, 4, 7, 8, 9}

| frame n | frame n+1 | frame n+2 |

PHR reporting    PHR reporting

NEW UL TX ... NEW UL TX ... NEW UL TX ... NEW UL TX ... NEW UL TX

0 1 2 3 4 5 6 7 8 9 0 1 2 3 4 5 6 7 8 9 0 1 2 3 4 5 6 7 8 9

t1                                    t3                       TIME →

1. periodicPHR-Timer expired                    t2          1. prohibitPHR-Timer expired          t4
2. PHR triggered                                              2. path loss change
                                                              3. PHR triggered

1. triggered PHR canceled                            1. triggered PHR canceled
2. periodicPHR-Timer restarted                       2. periodicPHR-Timer restarted
3. prohibitPHR-Timer restarted                       3. prohibitPHR-Timer restarted

# FIG. 8

| R | R | PH (Subframe Set n1) | Oct1

# FIG. 9

| $C_7$ | $C_6$ | $C_5$ | $C_4$ | $C_3$ | $C_2$ | $C_1$ | R |
|---|---|---|---|---|---|---|---|
| P | V | PH (Type 1, PCell) | | | | | |
| R | R | $P_{CMAX,c}$ 1 | | | | | |
| P | R | PH (Type 1, Scell 1, subframe set $n_1$) | | | | | |
| R | R | $P_{CMAX,c}$ 2 | | | | | |
| P | V | PH (Type 1, SCell 2) | | | | | |
| R | R | $P_{CMAX,c}$ 3 | | | | | |
| ... | | | | | | | |
| P | V | PH (Type 1, SCell n) | | | | | |
| R | R | $P_{CMAX,c}$ m | | | | | |

PHR of PCell

PHR of Scells 1 to n

## FIG. 10

| $C_7$ | $C_6$ | $C_5$ | $C_4$ | $C_3$ | $C_2$ | $C_1$ | $C_0$ |
|---|---|---|---|---|---|---|---|
| P | V | PH (Type 1, Scell 1, subframe set $n_2$) | | | | | |
| R | R | $P_{CMAX,c}$ 1 | | | | | |
| P | V | PH (Type 1, Scell 2, subframe set $n_3$) | | | | | |
| R | R | $P_{CMAX,c}$ 2 | | | | | |

## FIG. 11

| $C_7$ | $C_6$ | $C_5$ | $C_4$ | $C_3$ | $C_2$ | $C_1$ | R |
|---|---|---|---|---|---|---|---|
| P | V | PH (Type 2, PCell) | | | | | |
| R | R | $P_{CMAX,c}$ 1 | | | | | |
| P | V | PH (Type 1, Pcell, subframe set $n_1$) | | | | | |
| R | R | $P_{CMAX,c}$ 2 | | | | | |
| P | V | PH (Type 1, Scell 1) | | | | | |
| R | R | $P_{CMAX,c}$ 3 | | | | | |
| P | V | PH (Type 1, SCell 2) | | | | | |
| R | R | $P_{CMAX,c}$ 4 | | | | | |

PHR of PCell

PHR of Scells 1 to n

...

| P | V | PH (Type 1, SCell n) | | | | | |
|---|---|---|---|---|---|---|---|
| R | R | $P_{CMAX,c}$ m | | | | | |

## FIG. 12

| $C_7$ | $C_6$ | $C_5$ | $C_4$ | $C_3$ | $C_2$ | $C_1$ | $C_0$ |
|---|---|---|---|---|---|---|---|
| P | V | PH (Type 2, Pcell, subframe set $n_2$) | | | | | |
| R | R | $P_{CMAX,c}$ 1 | | | | | |
| P | V | PH (Type 1, Pcell, subframe set $n_2$) | | | | | |
| R | R | $P_{CMAX,c}$ 2 | | | | | |
| P | V | PH (Type 1, SCell 1, subframe set $n_3$) | | | | | |
| R | R | $P_{CMAX,c}$ 3 | | | | | |

PHR of PCell

PHR of Scell 1

## FIG. 13

FIG. 14

FIG. 15

| UL-DL CONFIG | SWITCH POINT PERIODICITY | SUBFRAME NUMBER | | | | | | | | | |
|---|---|---|---|---|---|---|---|---|---|---|---|
| | | 0 | 1 | 2 | 3 | 4 | 5 | 6 | 7 | 8 | 9 |
| 0 | 5ms | D | S | U | U | U | D | S | U | U | U |
| 1 | 5ms | D | S | U | U | D | D | S | U | U | D |
| 2 | 5ms | D | S | U | D | D | D | S | U | D | D |
| 3 | 10ms | D | S | U | U | U | D | D | D | D | D |
| 4 | 10ms | D | S | U | U | D | D | D | D | D | D |
| 5 | 10ms | D | S | U | D | D | D | D | D | D | D |
| 6 | 5ms | D | S | U | U | U | D | S | U | U | D |

DL HARQ REFERENCE CONFIG

UL HARQ REFERENCE CONFIG

## FIG. 16

UE 1701

SERVING ENB 1702

HARQ REFERENCE CONFIG

1711

ADAPTIVE TDD CONFIG

1712

TRANSMIT POWER CONTROL

1713

POWER ADJUSTMENT

1714

UPLINK TRANSMISSION

1715

## FIG. 17

| UL-DL | SUBFRAME NUMBER | | | | | | | | | |
|---|---|---|---|---|---|---|---|---|---|---|
| CONFIG | 0 | 1 | 2 | 3 | 4 | 5 | 6 | 7 | 8 | 9 |
| 0 | - | - | 6 | 7 | 4 | - | - | 6 | 7 | 4 |
| 1 | - | - | 6 | 4 | - | - | - | 6 | 4 | - |
| 2 | - | - | 4 | - | - | - | - | 4 | - | - |
| 3 | - | - | 4 | 4 | 4 | - | - | - | - | - |
| 4 | - | - | 4 | 4 | - | - | - | - | - | - |
| 5 | - | - | 4 | - | - | - | - | - | - | - |
| 6 | - | - | 7 | 7 | 5 | - | - | 7 | 7 | - |

Table 5.1.1.1-1: $K_{PUSCH}$ for TDD configuration 0-6

# FIG. 18

FIG. 19

| FRAME n | | | | | | | | | | FRAME n+1 | | | | | | | | | |
|---|---|---|---|---|---|---|---|---|---|---|---|---|---|---|---|---|---|---|---|
| TDD CONFIG #0 | | | | | | | | | | TDD CONFIG #2 | | | | | | | | | |
| D | S | U | U | U | D | S | U | U | U | D | S | U | D | D | D | S | U | D | D |
| 0 | 1 | 2 | 3 | 4 | 5 | 6 | 7 | 8 | 9 | 0 | 1 | 2 | 3 | 4 | 5 | 6 | 7 | 8 | 9 |

ACTUAL TDD
CONFIGURATION

$K_0 = 8$

$K_1 = 7$

$K_2 = 4$

$K_3 = 6$

DL HARQ
REFERENCE
CONFIGURATION

| D | S | U | D | D | D | D | D | D | D |
|---|---|---|---|---|---|---|---|---|---|
| 0 | 1 | 2 | 3 | 4 | 5 | 6 | 7 | 8 | 9 |

## FIG. 20

START

OBTAIN TDD CONFIGURATION INFORMATION BY A UE IN AN
ADAPTIVE TDD SYSTEM — 2101

OBTAIN AN HARQ REFERENCE CONFIGURATION — 2102

RECEIVE A TPC COMMAND IN ONE OR MORE PREVIOUS
SUBFRAMES — 2103

PERFORM POWER ADJUSTMENT IN A SUBSEQUENT SUBFRAME
BASED ON THE TPC COMMAND, THE LOCATION OF THE
PREVIOUS SUBFRAMES IS DETERMINED BASED ON THE HARQ
REFERENCE CONFIGURATION — 2104

END

## FIG. 21

| UL-DL CONFIG | SWITCH POINT PERIODICITY | SUBFRAME NUMBER | | | | | | | | | |
|---|---|---|---|---|---|---|---|---|---|---|---|
| | | 0 | 1 | 2 | 3 | 4 | 5 | 6 | 7 | 8 | 9 |
| 0 | 5ms | D | S | U | U | U | D | S | U | U | U |
| 1 | 5ms | D | S | U | U | D | D | S | U | U | D |
| 2 | 5ms | D | S | U | D | D | D | S | U | D | D |
| 3 | 10ms | D | S | U | U | U | D | D | D | D | D |
| 4 | 10ms | D | S | U | U | D | D | D | D | D | D |
| 5 | 10ms | D | S | U | D | D | D | D | D | D | D |
| 6 | 5ms | D | S | U | U | U | D | S | U | U | D |

SUBFRAME SET#1          SUBFRAME SET#2

## FIG. 22

UE 2301          SERVING ENB 2302

ADAPTIVE TDD CONFIG
2311

SUBFRAME SETS CONFIG
2312

TRANSMIT POWER CONTROL
2313

POWER ADJUSTMENT
2314

UPLINK TRANSMISSION
2315

## FIG. 23

RADIO FRAME

TDD CONFIG #6

| D | S | U | U | U | D | S | U | U | D |
|---|---|---|---|---|---|---|---|---|---|
| 0 | 1 | 2 | 3 | 4 | 5 | 6 | 7 | 8 | 9 |

$K_{PUSCH} = 7$

i-3=4

i-1=6

i=7

# FIG. 24

START

OBTAIN CONFIGURATION INFORMATION BY A UE IN AN ADAPTIVE TDD SYSTEM, EACH RADIO FRAME COMPRISES A PLURALITY OF SUBFRAMES, WHICH ARE CONFIGURED AS TWO OR MORE SUBFRAME SETS ⌇2501

RECEIVE A TRANSMIT POWER CONTROL (TPC) COMMAND IN A DOWNLINK SUBFRAME ⌇2502

DETERMINE A POWER CONTROL ADJUSTMENT STATE OF AN UPLINK SUBFRAME I BASED ON THE TPC COMMAND, THE POWER CONTROL ADJUSTMENT STATE OF SUBFRAME I IS ACCUMULATED FROM A POWER CONTROL ADJUSTMENT STATE OF A PREVIOUS UPLINK SUBFRAME J, SUBFRAME I AND J BELONG TO THE SAME SUBFRAME SET ⌇2503

END

# FIG. 25

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2013081088 W
- WO 2013051855 A1
- WO 2012087006 A1